(19) **Europäisches Patentamt / European Patent Office / Office européen des brevets**

(11) **EP 4 675 557 A1**

(12) **EUROPEAN PATENT APPLICATION**

(43) Date of publication:
**07.01.2026 Bulletin 2026/02**

(21) Application number: **25187633.0**

(22) Date of filing: **04.07.2025**

(51) International Patent Classification (IPC):
**G06T 7/11** (2017.01) **G06F 3/048** (2013.01)
**G06T 19/20** (2011.01)

(52) Cooperative Patent Classification (CPC):
**G06T 7/11; G06F 3/04815; G06F 3/04842;
G06F 3/04845; G06F 3/04847; G06T 19/20;
G06V 10/26;** G06T 2200/24; G06T 2207/20081;
G06T 2207/20084; G06T 2207/20092;
G06T 2207/20101; G06T 2207/20104;
G06T 2219/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.07.2024 KR 20240089114
03.07.2025 KR 20250088944**

(71) Applicant: **LG Electronics Inc.
Yeongdeungpo-gu
Seoul 07336 (KR)**

(72) Inventors:
• **SONG, Hyeonseop
Seoul (KR)**

• **CHOI, Seokhun
Seoul (KR)**
• **DO, Hoseok
Seoul (KR)**

(74) Representative: **Vossius & Partner
Patentanwälte Rechtsanwälte mbB
Siebertstraße 3
81675 München (DE)**

Remarks:
•MISSING PARTS INCLUDED UNDER RULE 56(3) EPC
•The references to parts of the description (originally filed page 7 is deemed to be deleted (Rule 56(4)(6) EPC).

(54) **DEVICE, METHOD OF OPERATING DEVICE AND NON-TRANSITORY RECORDING MEDIUM**

(57) A device according to one embodiment of the present disclosure may comprise a display; and at least one processor configured to: obtain a plurality of two-dimensional (2-Dimensional) images corresponding to a plurality of viewpoints, obtain a 3D image including one or more segmented 3D objects based on the obtained plurality of 2D images, display a UI (User Interface) element indicating that a segmented 3D object is selected on the display in response to a first command to select one of the one or more segmented 3D objects representing a unit object or a detailed object constituting the unit object, and display an edited 3D object on the display in response to a second command to edit the selected 3D object.

FIG. 1

**Description**

**BACKGROUND OF THE INVENTION**

**1.Field of the Invention**

The present invention relates to a device capable of segmenting and recognizing an object in an image.

**2. Discussion of the Related Art**

Conventional techniques for segmenting objects in a three-dimensional (3 Dimension) environment have various limitations.

Although some technologies may segment objects within a 3D scene, they have limitations in precisely segmenting the detailed structure of the object, making it difficult to accurately segment the object with a complex shape.

In particular, in many cases, there is an inconvenience in that the user must manually set the segmentation threshold while directly checking the shape or location of each object.

This method places a high workload on the user and may be difficult to segment accurately unless you are an expert.

In addition, some existing models include complex preprocessing or postprocessing steps for object segmentation or adopt a network structure with a large computational volume, making real-time processing difficult.

This immediately raises the problem that it is difficult to apply to interactive applications or user participation-based applications.

Furthermore, a system that require complex computational processes or manual adjustments have the disadvantage of being unintuitive to general users and having a high barrier to entry.

In addition, it is not very versatile as it requires repeated user feedback for accurate segmentation or a separate pre-training dataset.

Therefore, there is a growing demand for a technology that may efficiently segment objects in a 3D environment in a more precise and automated manner.

**SUMMARY OF THE INVENTION**

The purpose of the present disclosure may be to solve the problems pointed out above.

An object of the present disclosure may be to provide a novel 3D object segmentation technique having both a real-time performance and a user friendliness.

An object of the present disclosure may be to provide a method for easily and quickly performing various segmentations by dividing an object into two stages (an object unit and a smaller unit constituting the object).

An object of the present disclosure may be to provide a method that allows a user to interactively segment a 3D environment in real time with just a click without setting separate boundary values.

A device according to one embodiment of the present disclosure may comprise a display; and at least one processor configured to: obtain a plurality of two-dimensional (2-Dimensional) images corresponding to a plurality of viewpoints, obtain a 3D image including one or more segmented 3D objects based on the obtained plurality of 2D images, display a UI (User Interface) element indicating that a segmented 3D object is selected on the display in response to a first command to select one of the one or more segmented 3D objects representing a unit object or a detailed object constituting the unit object, and display an edited 3D object on the display in response to a second command to edit the selected 3D object.

A method of operating a device according to one embodiment of the present disclosure may obtaining a plurality of two-dimensional (2-Dimensional) images corresponding to a plurality of viewpoints, obtaining a 3D image including one or more segmented 3D objects based on the obtained plurality of 2D images; displaying a UI (User Interface) element indicating that a segmented 3D object is selected in response to a first command to select one of the one or more segmented 3D objects representing a unit object or a detailed object constituting the unit object; and displaying an edited 3D object in response to a second command to edit the selected 3D object.

A non-transitory recording medium having recorded thereon a computer-readable program for performing a method of operating a device according to one embodiment of the present disclosure, the method may comprise obtaining a plurality of two-dimensional (2-Dimensional) images corresponding to a plurality of viewpoints; obtaining a 3D image including one or more segmented 3D objects based on the obtained plurality of 2D images; displaying a UI (User Interface) element indicating that a segmented 3D object is selected in response to a first command to select one of the one or more segmented 3D objects representing a unit object or a detailed object constituting the unit object; and displaying an edited 3D object on the display in response to a second command to edit the selected 3D object.

According to an embodiment of the present disclosure, since editing is possible in a segmented object unit on a 3D image, attributes of each object may be individually adjusted, thereby providing precise customization and an intuitive interface without affecting the entire scene.

According to an embodiment of the present disclosure, by segmenting detailed objects constituting a unit object on a 3D image, attributes of each detailed object may be individually adjusted, and a user may perform precise customization at the detailed element level of the object.

According to an embodiment of the present disclosure, since a segmented 3D object and detailed objects of the 3D object on a 3D image are displayed on separate areas, the cognitive burden of manipulating a specific object in the entire scene may be reduced, and the accuracy of user input may be increased.

According to an embodiment of the present disclosure, by separately displaying coarse and fine level results and enabling selection and attribute editing for each segment, a user may perform intuitive and precise editing work based on a hierarchical structure even within a complex 3D scene.

According to embodiments of the present disclosure, an instability of contrastive learning in which the same object is classified with different segment IDs in different views may be resolved.

## BRIEF DESCRIPTION OF THE DRAWINGS

FIG. 1 is a block diagram illustrating components of an artificial intelligence device according to one embodiment of the present disclosure.

FIG. 2 is a diagram for explaining the configuration of an artificial intelligence server according to one embodiment of the present disclosure.

FIGS. 3 and 4 are drawings illustrating a learning method for generating a 3D image including a 3D object according to one embodiment of the present disclosure.

FIGS. 5A and 5B are diagrams illustrating a process of generating a first mask image of a first level and a second mask image of a second level from a 2D image using SAM according to one embodiment of the present disclosure.

FIGS. 6A and 6B are diagrams illustrating a process of generating a first feature field of a first level and a second feature field of a second level based on a plurality of 2D images.

FIGS. 7A and 7B are diagrams illustrating a process of performing contrastive learning according to an embodiment of the present disclosure.

Figure 8 is a diagram explaining that the segment ID to which a pixel belongs may vary depending on the view of the 2D image.

FIGS. 9A to 9D are diagrams for explaining Global Feature-guided learning according to an embodiment of the present disclosure.

FIG. 10 is a flowchart illustrating a method of operating a device according to another embodiment of the present disclosure.

FIG. 11 is a drawing for explaining a 3D segment model according to one embodiment of the present disclosure.

FIGS. 12A to 12I are drawings for explaining a process of editing a selected 3D object on a 3D image including a plurality of 3D objects according to an embodiment of the present disclosure.

FIGS. 13A to 13D are drawings for explaining a method for providing information on segmented 3D objects in a 3D image according to an embodiment of the present disclosure.

FIG. 14 is a drawing explaining a method for guiding shooting when shooting a 2D image to generate a 3D image according to one embodiment of the present disclosure.

FIG. 15 is a drawing illustrating an example of performing furniture arrangement in a home based on a 3D image obtained through a 3D segment model according to one embodiment of the present disclosure.

FIG. 16 may be a drawing illustrating a scenario for generating a top view image based on a 3D image and linking the 3D image and the top view image according to one embodiment of the present disclosure.

## DETAILED DESCRIPTION OF THE PREFERRED EMBODIMENTS

Artificial intelligence refers to the field of researching artificial intelligence or methodology to create it, and machine learning refers to the field of defining various problems dealt with in the field of artificial intelligence and researching methodology to solve them.

Machine learning is also defined as an algorithm that improves the performance of a task through consistent experience.

Artificial Neural Network (ANN) is a model used in machine learning, it may refer to an overall model with problem-solving capability that is composed of artificial neurons (nodes) that form a network through the combination of synapses.

Artificial neural network may be defined by connection pattern between neurons in different layers, a learning process that updates model parameter, and an activation function that generates output value.

An artificial neural network may include an input layer, an output layer, and optionally one or more hidden layers. Each layer may include one or more neurons, and the artificial neural network may include synapse connecting neurons. In an artificial neural network, each neuron may output the input signals input through the synapse, weight, and value of activation function for bias.

Model parameter refer to a parameter determined through learning and includes the weight of synapse connection and the bias of neurons. Hyperparameter refer to a parameter that must be set before learning in a machine learning algorithm and includes learning rate, number of repetition, mini-batch size, initialization function, etc.

The purpose of learning an artificial neural network may be seen as determining model parameter that minimize the loss function. The loss function may be used as an indicator to determine optimal model parameter during the learning process of an artificial neural network.

Machine learning may be classified into supervised learning, unsupervised learning, and reinforcement learning depending on the learning method.

Supervised learning refers to a method of training an artificial neural network with a label for the learning data given, a label may mean the correct answer (or result value) that the artificial neural network must infer when learning data is input to the artificial neural network.

Unsupervised learning may refer to a method of training an artificial neural network in a state where no label for training data is given.

Reinforcement learning may refer to a learning method in which an agent defined within an environment learns to select an action or action sequence that maximizes the cumulative reward in each state.

Among artificial neural networks, machine learning implemented with a deep neural network (DNN) that includes multiple hidden layers is also called deep learning, and deep learning is a part of machine learning.

Hereinafter, machine learning is used to include deep learning.

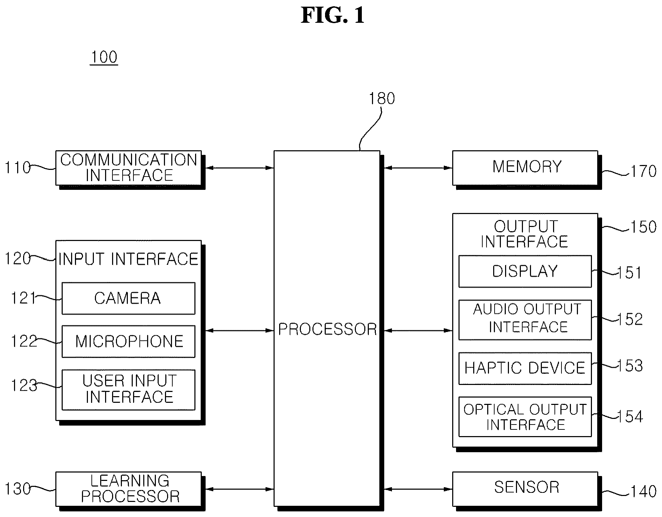

FIG. 1 is a block diagram for illustrating elements of an artificial intelligence device according to an embodiment of the present disclosure.

The artificial intelligence device 100 may be implemented as a fixed or movable device such as a TV, a projector, a mobile phone, a smartphone, a desktop computer, a laptop, a digital broadcasting terminal, a PDA (personal digital assistant), a PMP (portable multimedia player), a navigation, a tablet PC, a wearable device, and a set-top box (STB), a DMB receiver, a radio, a washing machine, a refrigerator, a desktop computer, a digital signage, a robot, a vehicle, etc.

Referring to FIG. 1, the artificial intelligence device 100 may include a communication interface 110, an input interface 120, a learning processor 130, a sensor 140, an output interface 150, a memory 170, and a processor 180.

The communication interface 110 may transmit and receive data with external device such as other artificial intelligence device or the AI server 200 using wired or wireless communication technology. For example, the communication interface 110 may transmit and receive sensor information, user input, learning model, and control signal with external device.

Communication technologies used by the communication interface 110 include Global System for Mobile communication (GSM), Code Division Multi Access (CDMA), Long Term Evolution (LTE), 5G, Wireless LAN (WLAN), and Wireless-Fidelity (Wi-Fi). , Bluetooth (Bluetooth), RFID (Radio Frequency Identification), Infrared Data Association (IrDA), ZigBee, NFC (Near Field Communication), etc.

The input interface 120 may acquire various types of data.

The input interface 120 may include a camera 121 for capturing image, a microphone 122 for receiving audio signals, and a user input interface 123 for receiving information from a user.

The camera 121 or the microphone 122 is treated as a sensor, and the signal obtained from the camera 121 or the microphone 122 may be called sensing data or sensor information.

The input interface 120 may obtain training data for model learning and input data to be used when obtaining an output using the learning model. The input interface 120 may acquire unprocessed input data, and in this case, the processor 180 or the learning processor 130 may extract input feature by preprocessing the input data.

The camera 121 processes image frame such as still image or moving image obtained by an image sensor in video call mode or photographing mode. Processed image frame may be displayed on display 151 or stored in memory 170.

The microphone 122 processes external acoustic signal into electrical voice data. The processed voice data may be utilized in various ways depending on the function (or application being executed) being performed by the artificial intelligence device 100. Meanwhile, various noise removal algorithms may be applied to the microphone 122 to remove noise generated in the process of receiving an external acoustic signal.

The user input interface 123 is for receiving information from the user, when information is input through the user input interface 123, the processor 180 may control the operation of the artificial intelligence device 100 to correspond to the input information.

The user input interface 123 is a mechanical input means (or mechanical key, for example, a button, dome switch, jog wheel, or jog switch located on the front/rear or side of the artificial intelligence device 100). etc.) and a touch input means.

As an example, the touch input may consist of a virtual key, soft key, or visual key displayed on the touch screen through software processing, or a touch key placed in a part other than the touch screen.

The learning processor 130 may train a model composed of an artificial neural network using training data. The learned artificial neural network may be referred to as a learning model. A learning model may be used to infer a result value for new input data other than learning data, and the inferred value may be used as the basis for a decision to perform an operation.

The learning processor 130 may perform AI processing together with the learning processor 240 of the AI server 200.

The learning processor 130 may include memory integrated or implemented in artificial intelligence device 100. The learning processor 130 may be implemented using the memory 170, an external memory directly coupled to the artificial intelligence device 100, or a memory maintained in an external device.

The sensor 140 may obtain at least one of internal information of the artificial intelligence device 100, information on the surrounding environment of the artificial intelligence device 100, or user information using various sensors.

The sensor 140 may include at least one of a proximity sensor, an illumination sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar sensor, or a radar sensor.

The output interface 150 may generate output related to vision, hearing, or tactile sensation.

The output interface 150 may include a display 151 that outputs an image, an audio output interface 152 that outputs audio, a haptic device 153 that outputs tactile information, and an optical output interface 154 that outputs light.

The display 151 displays (outputs) information processed by the artificial intelligence device 100. For example, the display 151 may display execution screen information of an application running on the artificial intelligence device 100, or user interface (UI) and graphic user interface (GUI) information according to the execution screen information.

The display 151 may be implemented as a touch screen by forming a mutual layer structure or being integrated with the touch sensor. The touch screen functions as a user input interface 123 that provides an input interface between the artificial intelligence device 100 and the user, and may simultaneously provide an output interface between the artificial intelligence device 100 and the user.

The audio output interface 152 may output audio data received from the communication interface 110 or stored in the memory 170 in call signal reception, call mode or recording mode, voice recognition mode, broadcast reception mode, etc.

The audio output interface 152 may include at least one of a receiver, a speaker, or a buzzer.

The haptic device 153 generates various tactile effects that the user may feel. A representative example of a tactile effect generated by the haptic device 153 may be vibration.

The light output interface 154 uses light from the light source of the artificial intelligence device 100 to output a signal to notify that an event has occurred. Examples of events that occur in the artificial intelligence device 100 may include receiving a message, receiving a call signal, a missed call, an alarm, a schedule notification, receiving an email, receiving information through an application, etc.

The memory 170 may store data supporting various functions of the artificial intelligence device 100. For example, the memory 170 may store input data obtained from the input interface 120, learning data, learning model, learning history, etc.

The processor 180 may determine at least one executable operation of the artificial intelligence device 100 based on information determined or generated using a data analysis algorithm or a machine learning algorithm.

The processor 180 may control the elements of the artificial intelligence device 100 to perform the determined operation.

To this end, the processor 180 may request, search, receive, or utilize data from the learning processor 130 or the memory 170, and may control elements of the artificial intelligence device 100 to be performed an operation that is predicted or an operation that is determined to be desirable among the at least one executable operation.

If linkage with an external device is necessary to perform a determined operation, the processor 180 may generate a control signal to control the external device and transmit the generated control signal to the external device.

The processor 180 may obtain intent information for user input and determine the user's request based on the obtained intent information.

The processor 180 may obtain intent information corresponding to the user input using at least one of a STT (Speech To Text) engine for converting voice input into a character string or a Natural Language Processing (NLP) engine for acquiring intent information of natural language.

At least one of the STT engine and the NLP engine may be composed of at least a portion of an artificial neural network learned according to a machine learning algorithm. And, at least one of the STT engine or the NLP engine may be learned by the learning processor 130, learned by the learning processor 240 of the AI server 200, or learned by distributed processing thereof.

The processor 180 collects history information including the user's feedback on the operation of the artificial intelligence device 100 and stores it in the memory 170 or the learning processor 130 or the AI server 200, etc. May be transmitted to external devices. The collected historical information may be used to update the learning model.

The processor 180 may control at least some of the elements of the artificial intelligence device 100 to run an application program stored in the memory 170.

The processor 180 may operate two or more of the elements included in the artificial intelligence device 100 in combination with each other in order to run the application program.

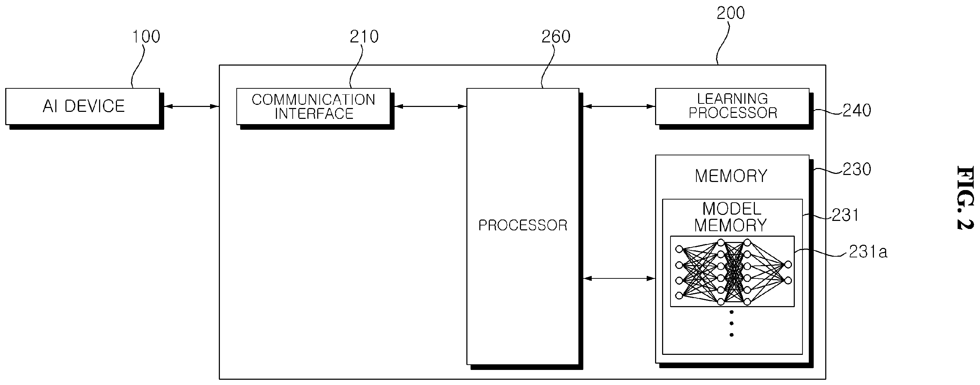

FIG. 2 is a diagram for illustrating the configuration of an artificial intelligence server according to an embodiment of the present disclosure.

Referring to FIG. 2, the AI server 200 may refer to a device that trains an artificial neural network using a machine learning algorithm or uses a learned artificial neural network.

The AI server 200 may be composed of a plurality of servers to perform distributed processing, and may be defined as a 5G network. The AI server 200 may be included as a part of the artificial intelligence device 100 and may perform at least part of the AI processing.

The AI server 200 may include a communication interface 210, a memory 230, a learning processor 240, and a processor 260.

The communication interface 210 may transmit and receive data with an external device such as the artificial intelligence device 100.

The memory 230 may include a model memory 231. The model memory 231 may store a model (or artificial neural network, 231a) that is being trained or has been learned through the learning processor 240.

The learning processor 240 may train the artificial neural network 231a using training data. The learning model may be used while mounted on the AI server 200 of the artificial neural network, or may be mounted and used on an external device such as the artificial intelligence device 100.

The learning model may be implemented in hardware, software, or a combination of hardware and software. When part or all of the learning model is implemented as software, one or more instructions constituting the learning model may be stored in the memory 230.

The processor 260 may infer a result value for new input data using a learning model and generate a response or control command based on the inferred result value.

Hereinafter, the artificial intelligence device 100 of FIG. 1 may be referred to as a device 100. The device 100 may include all components of the artificial intelligence device 100 illustrated in FIG. 1.

Hereinafter, one or more processors 180 may be provided.

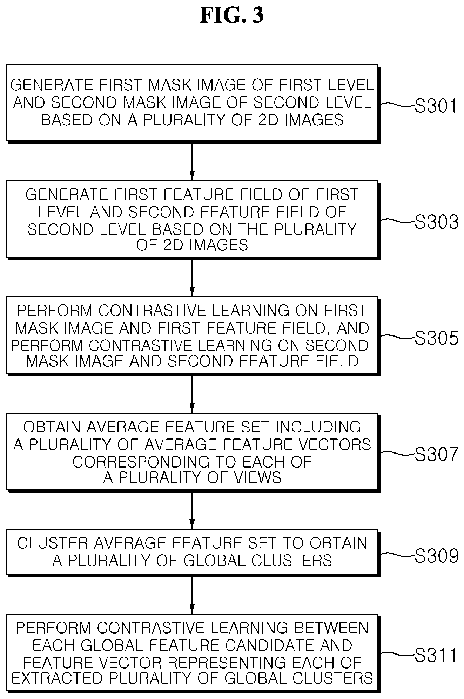

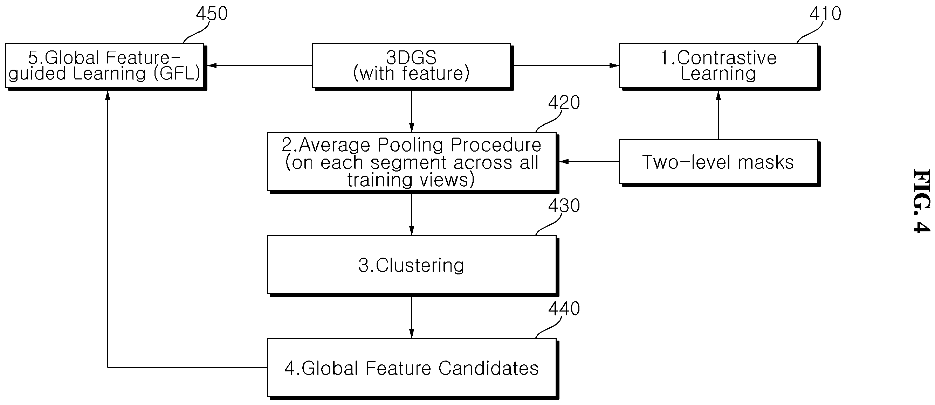

FIGS. 3 and 4 are drawings illustrating a learning method for generating a 3D image including a 3D object according to one embodiment of the present disclosure.

Hereinafter, a unit object may represent an object corresponding to a relatively large and distinct subject, and a detailed object may represent a partial object constituting the unit object.

A first level may be a coarse level, and a second level may be a fine level.

The coarse level may be a level that identifies (segments) multiple unit objects contained within an image.

The fine level may be a level that identifies (segments) detailed objects from each unit object included in the image.

An object segmentation may be a process of identifying unit objects or detailed objects of each unit object within an image, and distinguishing each identified unit object from other unit objects or distinguishing each identified detailed objects from other detailed objects.

A segment may be a spatially divided region or representation of an object.

A mask may be a binary or multi-class image generated to represent a segment on an image.

A 3D object may represent either a unit object or a detailed object.

Steps S301 to S311 of Fig. 3 may be a learning process of a 3D segment model.

The 3D segment model may be a model that generates a 3D image in which one or more objects are segmented from a plurality of 2D images corresponding to a plurality of viewpoints.

Referring to FIGS. 3 and 4, the processor 180 of the device 100 may generate a first mask image of a first level and a second mask image of a second level based on a plurality of 2D images (S301).

Each of the plurality of 2D images 400-1 to 400-n may be an image captured from different views (or view points, view angles). The plurality of 2D images 400-1 to 400-n may be referred to as training view images.

The processor 180 may obtain a first mask image of the first level and a second mask image of the second level from each 2D image using a SAM (Segment Anything model).

The SAM may be a model that may automatically segment objects within an image based on simple user input (click, box). The SAM may be stored in memory 170.

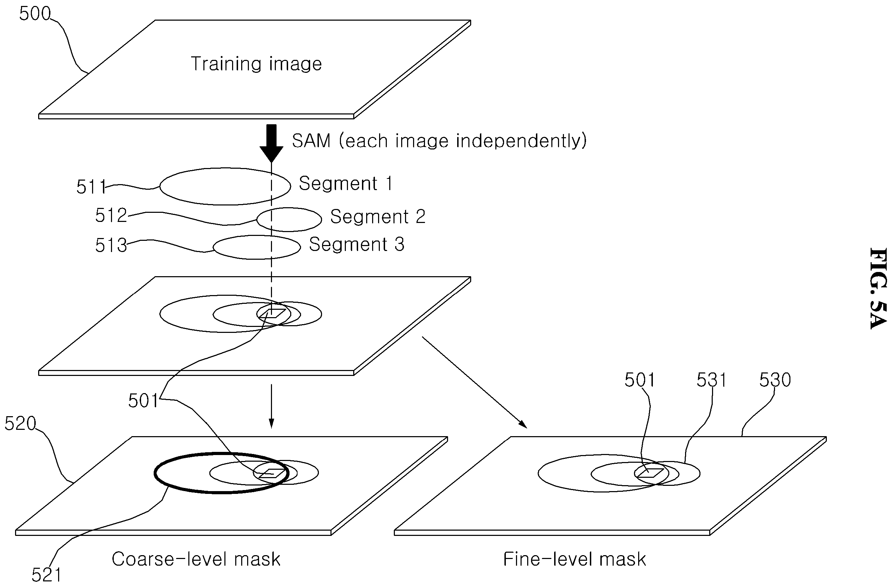

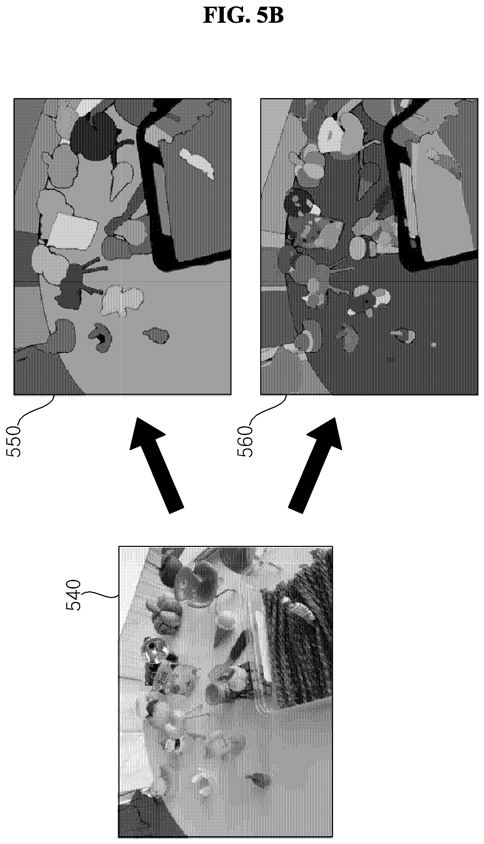

FIGS. 5A and 5B are diagrams illustrating a process of generating a first mask image of a first level and a second mask image of a second level from a 2D image using SAM according to one embodiment of the present disclosure.

The training image 500 may be a 2D image captured from a specific viewing angle. The training image 500 may be composed of a plurality of pixels.

The processor 180 may independently execute SAM for each training image 500 to generate a plurality of segments 511, 512, 513. The plurality of segments 511, 512, 513 may include a first segment 511, a second segment 512, and a third segment 513. Each of the plurality of segments 511, 512, 513 may be a partial region included in the entire region formed by the training image 500. Each of the plurality of segments 511, 512, 513 may correspond to an object included in the training image 500.

The pixel 501 included in the training image 500 may be included in each of the first segment 511, the second segment 512, and the third segment 513.

The processor 180 may generate a first level mask 521 by assigning the pixel 501 included in the training image 500 to the first segment 511 having the largest area among the plurality of segments 511, 512, 513. The first level mask 521 may have a segment identifier that identifies a unit object.

The processor 180 may generate a first mask image 520 including a plurality of first level masks by assigning each of a plurality of pixels included in the training image 500 to a segment with the largest area in order of priority.

The processor 180 may generate a second level mask 531 by assigning the pixel 501 included in a training image 500 to the third segment 513 having the smallest area among the plurality of segments 511, 512, 513. The second level mask 531 may have a segment identifier that identifies a detailed object.

The processor 180 may generate a second mask image 530 including a plurality of second level masks by assigning each of the plurality of pixels included in the training image 500 to a segment with the smallest area in order of priority.

Referring to FIG. 5B, the results of applying SAM to an actual 2D image 540 to obtain a first mask image 550 at the coarse level and a second mask image 560 at the fine level are shown.

Again, FIGS. 3 and 4 are described.

The processor 180 may generate a first feature field of the first level and a second feature field of the second level based on the plurality of 2D images (S303).

The processor 180 may generate the first feature field of the first level and the second feature field of the second level based on a plurality of 2D images through a 3D Gaussian Splatting (3DGS) method.

The 3D Gaussian splatting method may classify a 3D image generated by the plurality of 2D images 400-1 to 400-n into a plurality of 3D Gaussians, and project the classified plurality of 3D Gaussians onto a 2D screen to render a feature field.

The processor 180 may generate the first feature field from a coarse level feature vector and the second feature field from a fine level feature vector using a Rasterizer rendering method.

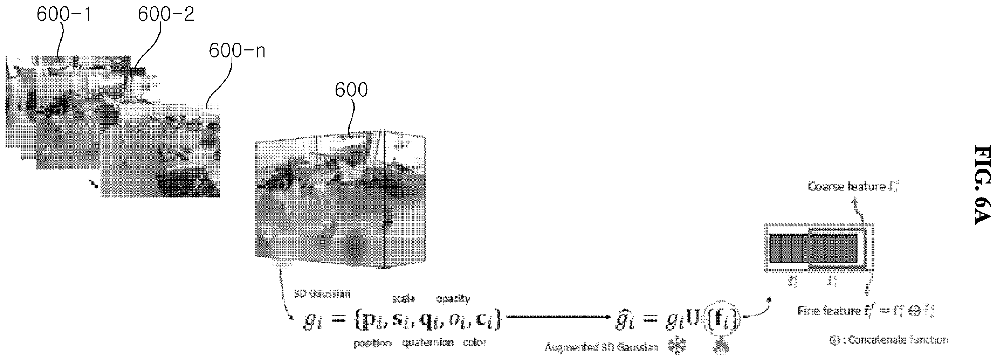

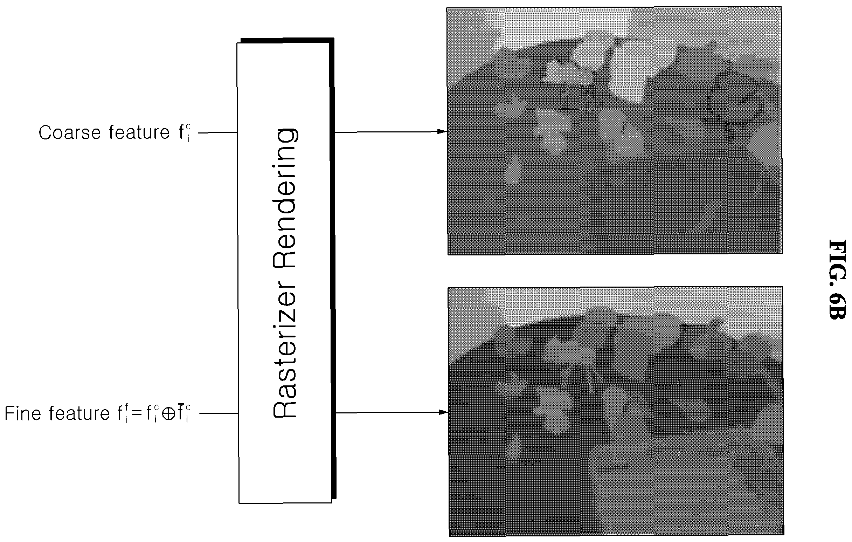

FIGS. 6A and 6B are diagrams illustrating a process of generating a first feature field of a first level and a second feature field of a second level based on a plurality of 2D images.

Referring to FIG. 6A, a 3D view image 600 is illustrated that is reconstructed based on a plurality of 2D images 600-1 to 600-n corresponding to a plurality of viewpoints.

The 3D view image 600 may be a scene rendering result based on a virtual camera that is configured by integrating information from the plurality of viewpoints.

The processor 180 may extract a plurality of 3D Gaussians from the 3D view image 600. A 3D Gaussian may be a unit element that expresses visual information such as a shape, a position, and a color of an object in a 3D space in the form of a probability distribution.

Each 3D Gaussian may be expressed by the following [Mathematical Formula 1].

[Mathematical Formula 1]

$$g_i = \{\mathbf{p}_i, \mathbf{s}_i, \mathbf{q}_i, o_i, \mathbf{c}_i\}$$

$g_i$ is a i-th 3D Gaussian, $p_i$ is a position of the i-th 3D Gaussian, $s_i$ is a scale of the i-th 3D Gaussian, $q_i$ is a quaternion of the i-th 3D Gaussian, $o_i$ is a opacity of the i-th 3D Gaussian, and $c_i$ may be a color of the i-th 3D Gaussian.

The processor 180 may obtain an augmented 3D Gaussian based on the 3D Gaussian and a feature vector.

The augmented 3D Gaussian may be expressed as the following [Mathematical Formula 2].

[Mathematical formula 2]

$$\hat{g}_i = g_i \cup \{\mathbf{f}_i\}$$

$\hat{g}_i$ is an i-th augmented 3D Gaussian, gi is the i-th 3D Gaussian, and may be an i-th feature vector or an i-th feature vector of the fine level. The feature vector may be referred to as a feature. The augmented 3D Gaussian may be a Gaussian in which the i-th feature vector is combined with the 3D Gaussian.

The i-th feature vector of fine level $\mathbf{f}_i^f$ may include the i-th feature vector of the coarse level $\mathbf{f}_i^c$.

The i-th feature vector of fine level $\mathbf{f}_i^f$ may be obtained by the following [Mathematical Formula 3].

[Mathematical Formula 3]

$$\mathbf{f}_i^f = \mathbf{f}_i^c \oplus \overline{\mathbf{f}}_i^c$$

$\mathbf{f}_i^c$ may be a feature vector of the i-th coarse level. $\overline{\mathbf{f}}_i^c$ may be the i-th transformed feature vector that is the feature vector of the i-th coarse level processed (projected or upsampled) to fit the fine level.

The i-th feature vector of fine level $\mathbf{f}_i^f$ may be obtained by combining the feature vector of the i-th coarse level $\mathbf{f}_i^c$ and the i-th transformed feature vector $\overline{\mathbf{f}}_i^c$ through a concatenation function.

According to a granularity prior, features that are already distinguished at the coarse level should also be distinguished at the fine level, so the i-th feature vector of the fine level $\mathbf{f}_i^f$ may configured to include the feature vector of the i-th coarse level $\mathbf{f}_i^c$.

Referring to FIG. 6B, the processor 180 may generate a first feature field 610 from a coarse level feature vector and a second feature field 620 from a fine level feature vector using a Rasterizer rendering method.

The Rasterizer rendering method may be a way to convert feature vectors in the form of 3D modeling into a 2D image composed of pixels.

The Rasterizer rendering method may be a method of generating a feature field through the following [Mathematical Formula 4].

[Mathematical Formula 4]

$$\mathbf{F}^l = \sum_{i \in \mathcal{N}} \mathbf{f}_i^l \alpha_i T_i,$$

$F^l$ represents a feature field, $\mathbf{f}_i^l$ represents the i-th feature vector, $\alpha_i$ represents a rasterization weight of the i-th 3D Gaussian, Ti may represent an i-th transformation matrix, and 1 may represent a granularity level.

Each of the first feature field 610 and the second feature field 620 may be a pixel-unit feature distribution map generated by projecting 3D Gaussians onto a 2D screen using the Rasterizer rendering method.

Again, FIG. 3 is explained.

The processor 180 may perform a contrastive learning on the generated first mask image and the generated first feature field, and may perform the contrastive learning on the generated second mask image and the generated second feature field (S305).

Step S305 may correspond to the Contrastive Learning process 410 of FIG. 4.

The processor 180 may perform the contrastive learning for the first mask image and the first feature field so that pixels having the same segment identifier (segment ID) have similar feature vector, and pixels having different segment identifiers have different feature vector.

The processor 180 may perform the contrastive learning for the second mask image and the second feature field so that pixels having the same segment identifier (segment ID) have similar feature vector, and pixels having different segment identifiers have different feature vector.

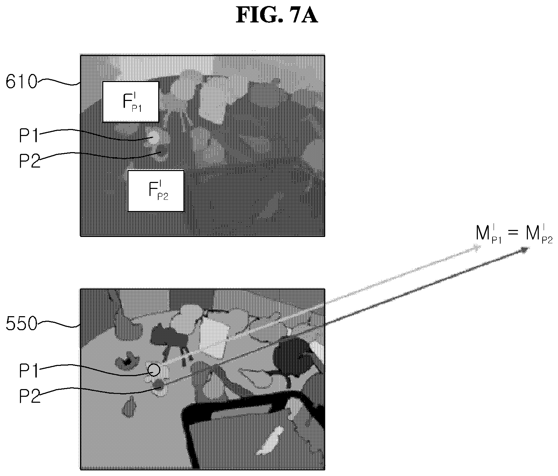

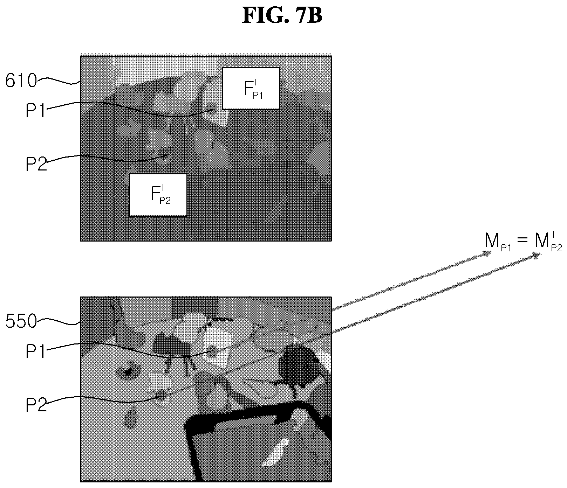

FIGS. 7A and 7B are diagrams illustrating a process of performing contrastive learning according to an embodiment of the present disclosure.

Referring to FIG. 7A, the first feature field 610 corresponding to the coarse level and the first mask image 550 corresponding to the coarse level are illustrated.

The feature vector of the first pixel p1 included in the first feature field 610 may be expressed as $\mathbf{F}^l_{p_1}$, and the feature vector of the second pixel p2 may be expressed as $\mathbf{F}^l_{p_2}$.

The processor 180 may calculate a cosine similarity of two feature vectors through the following [Mathematical Formula 5].

[Mathematical Formula 5]

$$\mathbf{S}^l(\mathbf{p_1},\mathbf{p_2}) = <\mathbf{F}^l_{p_1}, \mathbf{F}^l_{p_2}>$$

$S^l(p_1, p_2)$ may represent the cosine similarity between feature vectors corresponding to two pixels (p1, p2).

The processor 180 detects when the segment IDs of two pixels (p1, p2) in the first mask image 550 of the coarse level are the same ($M^l_{p_1} = M^l_{p_2}$, positive pair), may calculate a loss function of the contrastive learning through the following [Mathematical Formula 6].

[Mathematical Formula 6]

$$\mathcal{L}^{\mathrm{cont}}_{\mathrm{pos}} = -\frac{1}{|P_1||P_2|} \sum_l^{\{f,c\}} \sum_{p_1}^{P_1} \sum_{p_2}^{P_2} \mathbb{1}\left[M^l_{p_1} = M^l_{p_2}\right] \mathbf{S}^l(p_1, p_2),$$

$\mathcal{L}^{\mathrm{cont}}_{\mathrm{pos}}$ may be a positive loss function to increase the cosine similarity of feature vectors corresponding to pixels belonging to the same segment.

The processor 180 may perform the contrastive learning so that the positive loss function is minimized. Accordingly, feature vectors of pixel pairs belonging to the same segment may be learned to become closer to each other.

Referring to FIG. 7B, the first feature field 610 corresponding to the coarse level and the first mask image 550 corresponding to the coarse level are illustrated.

The feature vector of the first pixel p1 included in the first feature field 610 may be expressed as $\mathbf{F}^l_{p_1}$, and the feature vector of the second pixel p2 may be expressed as $\mathbf{F}^l_{p_2}$.

The processor 180 may calculate the cosine similarity of two feature vectors through the [Mathematical Formula 5].

The processor 180 detects when the segment IDs of two pixels (p1, p2) in the first mask image 550 of the coarse level are different ($M^l_{p_1} = M^l_{p_2}$, negative pair), the loss function of contrastive learning may be calculated through the following [Mathematical Formula 7].

[Mathematical formula 7]

$$\mathcal{L}^{\mathrm{cont}}_{\mathrm{neg}} = \frac{1}{|P_1||P_2|} \sum_l^{\{f,c\}} \sum_{p_1}^{P_1} \sum_{p_2}^{P_2} \mathbb{1}\left[M^l_{p_1} \neq M^l_{p_2}\right] \mathbb{1}\left[\mathbf{S}^l(p_1, p_2) > \tau^l\right] \mathbf{S}^l(p_1, p_2)$$

$\mathcal{L}_{neg}^{cont}$ may be a negative loss function to reduce the cosine similarity of feature vectors corresponding to pixels belonging to different segments.

The processor 180 may perform the contrastive learning so that the negative loss function is maximized. The feature vectors of pixel pairs belonging to different segments may be learned to become farther to each other.

Meanwhile, in Fig. 7B, the processor 180 may perform the contrastive learning so that the cosine similarity of the feature vectors corresponding to two pixels (p1, p2) diverse up to a threshold similarity . At the coarse level, the threshold similarity may be 0.5, and at the fine level, the threshold similarity may be 0.75, but these are just example values.

Contrastive learning according to FIGS. 7A and 7B may also be performed for the fine level.

An overall loss function of contrastive learning may be expressed by the following [Mathematical Formula 8].

[Mathematical formula 8]

$$\mathcal{L}_{cont} = \mathcal{L}_{pos}^{cont} + \lambda_{neg}^{cont} \mathcal{L}_{neg}^{cont}$$

$\mathcal{L}_{cont}$ may represent the overall loss function of contrastive learning, and $\lambda_{neg}^{cont}$ may be a hyperparameter that controls a balance of $\mathcal{L}_{pos}^{cont}$ and $\mathcal{L}_{neg}^{cont}$

For this type of the contrastive learning, depending on the view of the 2D image, any one pixel contained in the mask image may have the same segment ID or different segment IDs.

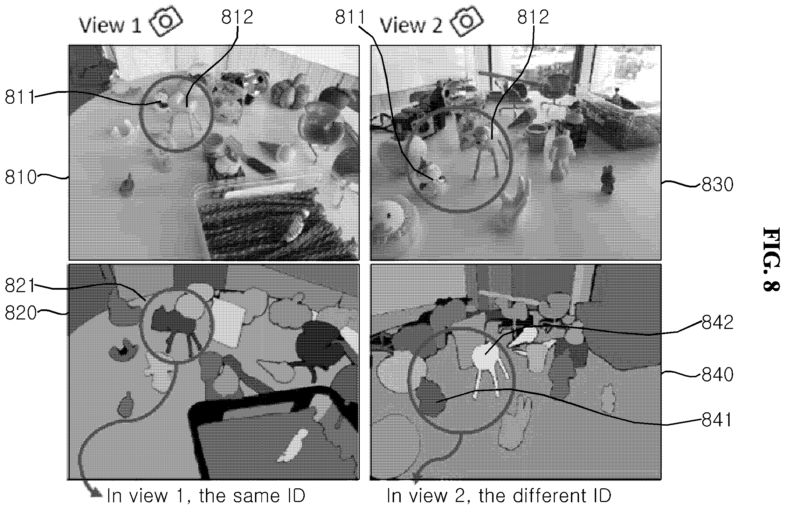

FIG. 8 is a diagram explaining that the segment ID to which the pixel belongs may vary depending on the view of the 2D image.

Referring to FIG. 8, a first image 810 captured from a first view and a second image 830 captured from a different angle from the first view are illustrated.

Each of the first image 810 and the second image 830 may include a first unit object 811 and a second unit object 812.

Additionally, a coarse level mask image 820 obtained from the first image 810 through the SAM and a coarse level mask image 840 obtained from the second image 830 through the SAM are illustrated.

In the mask image 820 of the first view, the first unit object 811 and the second unit object 812 have the same segment ID and may therefore be classified as same segment 821.

However, in the mask image 840 of the second view, the first unit object 811 corresponds to a first segment 841 and the second unit object 812 corresponds to a second segment 842, and since they have different segment IDs, they may be classified as different segments.

In this way, mask images generated based on the SAM may suffer from instability in the contrastive learning due to a view mismatch.

Accordingly, this disclosure aims to solve the instability of the contrastive learning through Global Feature-guided Learning (GFL).

Again, FIGS. 3 and 4 are described.

The processor 180 may obtain an average feature set including a plurality of average feature vectors corresponding to each of a plurality of views (S307).

Step S307 may correspond to Average Pooling process 420 of FIG. 4.

The processor 180 may cluster the acquired average feature set to obtain a plurality of global clusters (S309).

Step S309 may correspond to Clustering process 430 of FIG. 4.

The processor 180 may perform a contrastive learning between each global feature candidate and feature vector representing each of the extracted plurality of global clusters (S311).

Step S311 may correspond to the global feature candidate extraction process 440 and the Global Feature-guided learning (GFL) process of FIG. 4.

Steps S307 to S311 may be included in the Global Feature-guided learning (GFL) process.

The processor 180 may learn a 3D segment model through steps S301 to S311.

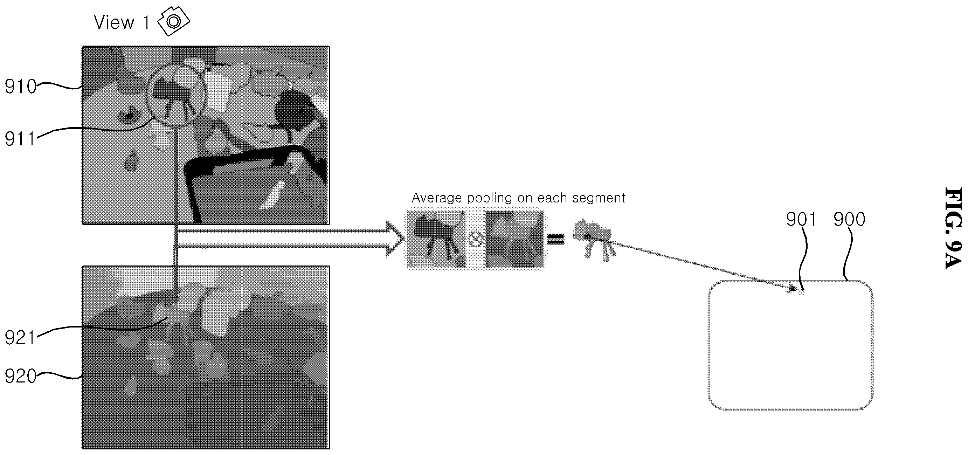

FIGS. 9A to 9D are diagrams for explaining Global Feature-guided learning according to an embodiment of the present disclosure.

The Global Feature-guided learning may be a process of segmenting an object by extracting global feature candidates representing each segment based on 2D images corresponding to multiple views, and by clustering the extracted global feature candidates to group segments corresponding to the same object.

Referring to FIG. 9A, a first mask image 910 of the coarse level obtained from a 2D image corresponding to a first view through the SAM and a first feature field 920 of the coarse level obtained based on 3D Gaussians are illustrated. Each of a plurality of segments constituting the first mask image 910 may be assigned a different segment ID. A plurality of pixels constituting each segment may be assigned the same segment ID.

The processor 180 may average a plurality of feature vectors corresponding to a plurality of pixels included in a first feature vector set 921 corresponding to a first segment 911 included in the first mask image 910 through an average pooling method (Average Pooling).

The processor 180 may obtain a first average feature vector 901 obtained through an averaging process. The processor 180 may place the first average feature vector 901 on a feature space 900. The feature space 900 may be a high-dimensional feature space.

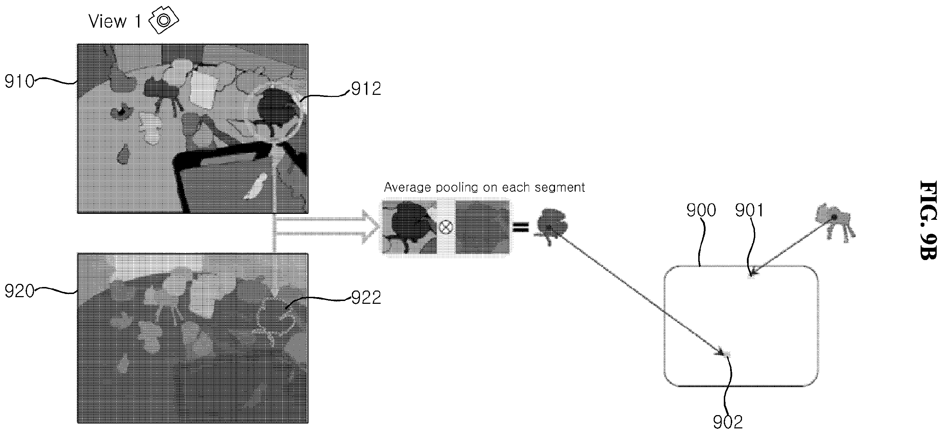

Referring to FIG. 9B, the processor 180 may average a plurality of feature vectors corresponding to a plurality of pixels included in a second feature vector set 922 corresponding to a second segment 912 through the average pooling method.

The processor 180 may obtain a second average feature vector 902 obtained through an averaging process. The processor 180 may place the second average feature vector 902 on the feature space 900.

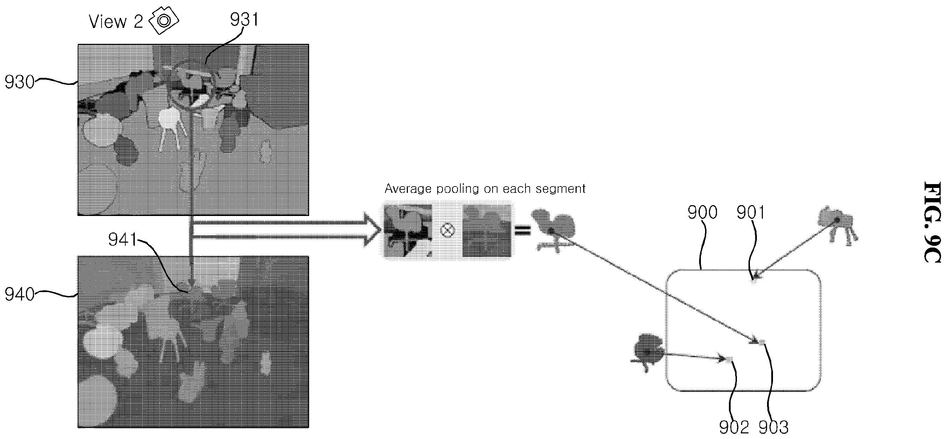

Referring to FIG. 9C, a second mask image 930 of the coarse level obtained from a 2D image corresponding to a second view through the SAM and a first feature field 940 of the coarse level obtained based on 3D Gaussians are illustrated. Each of a plurality of segments constituting the second mask image 930 may be assigned a different segment ID. A plurality of pixels constituting each segment may be assigned the same segment ID.

The processor 180 may average a plurality of feature vectors corresponding to a plurality of pixels included in a third feature vector set 941 corresponding to a third segment 931 through the average pooling method.

The processor 180 may obtain a third average feature vector 903 obtained through an averaging process. The processor 180 may place the third average feature vector 903 on the feature space 900.

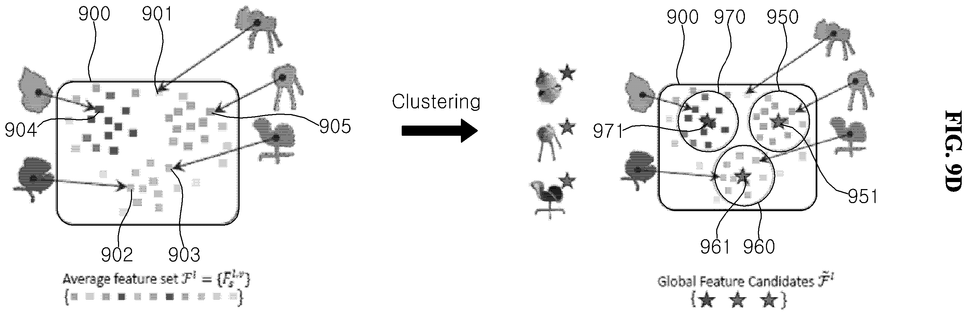

The processor 180 may obtain an average feature set including average feature vectors (901 to 905) obtained from all views, and place the obtained average feature set on the feature space 900, as illustrated in FIG. 9D.

Meanwhile, the processor 180 may obtain the average feature set through the following [Mathematical Formula 9] by applying the average pooling method.

[Mathematical formula 9]

$$\mathcal{F}^l = \left\{ \mathbf{F}_s^{l,v} \in \mathbb{R}^D \;\middle|\; \mathbf{F}_s^{l,v} = \frac{1}{|\mathcal{P}_s^{l,v}|} \sum_{p \in \mathcal{P}_s^{l,v}} \mathbf{F}_p^{l,v}, \quad 1 \le s \le \max_v M^{l,v} \right\}$$

$\mathcal{M}^l = \{M^{l,v}\}_{v=1}^{V}$ may be defined as a set of masks for all viewpoints for two levels of masks (e.g., coarse level and fine level). V may be the total number of viewpoints. $M^{l,v} \in \mathbb{Z}^{H \times W}$ may be a mask for viewpoint v at level 1.

$\mathcal{F}^l$ is a mean feature set including mean feature vectors, and l={f,c} may represent a granularity level. f may represent the fine level, c may represent the coarse level, and s may identify a segment that identifies an object defined in the mask. s may be a segment ID. $\mathbf{F}_s^{l,v}$ may represent the average feature vector representing the segment s of the viewpoint (v). $\mathcal{P}_s^{l,v}$ may represent a set of pixels belonging to a segment s of a viewpoint v. $\mathbf{F}_p^{l,v}$ may represent the feature vector of pixel p.

D may represent the dimension of the feature vector.

The processor 180 may perform clustering on the average feature set arranged on a feature space 900 using the HDBSCAN (Hierarchical Density-Based Spatial Clustering of Applications with Noise) method.

The HDBSCAN method is a density-based unsupervised learning method that automatically determines the number of clusters by considering a spatial distribution of average feature vectors and may be a clustering method that excludes noise data.

The processor 180 may generate a plurality of global clusters 950, 960, 970 according to the clustering of the HDBSCAN method. The processor 180 may obtain a plurality of global feature candidates 951, 961, 971 representing each global cluster by applying the HDBSCAN method to the average feature vectors. Each global cluster may be a cluster that identifies one unit object. The plurality of global feature candidates may be referred to as $\tilde{\mathcal{F}}^l$.

Each global feature candidate may be the candidate located at the very center of each global cluster.

The first global feature candidate 951 may represent the first global cluster 950, the second global feature candidate 961 may represent the second global cluster 960, and the third global feature candidate 971 may represent the third global cluster 970.

After that, the processor 180 may find the global cluster closest to the i-th feature vector $\mathbf{f}_i^l$ or the i-th 3D Gaussian at level 1 among plurality of global clusters). The i-th feature vector $\mathbf{f}_i^l$ may be referred to as a Gaussian feature through the following [Mathematical Formula 10].

[Mathematical formula 10]

$$c_i^l = \operatorname{argmax}_c \tilde{\mathbf{S}}^l(i, c)$$
$$\text{where } \tilde{\mathbf{S}}^l(i, c) = \langle f_i^l, \tilde{\mathcal{F}}_c^l \rangle$$

$c_i^l$ is. may represent an identifier of the global cluster c that is most similar to the i-th Gaussian feature $\mathbf{f}_i^l$ at the granularity level 1. $\tilde{S}^l(i, c)$ is may represent the cosine similarity between the i-th Gaussian feature $\mathbf{f}_i^l$ and the global feature candidate $\bar{\mathbf{F}}_c^l$ representing the center of the global cluster.

A positive loss function $\mathcal{L}_{\text{pos}}^{\text{GFL}}$ is used to induce the Gaussian feature to belong to the global cluster with the highest probability may be defined as the following [Mathematical Formula 11].

[Mathematical Formula 11]

$$\mathcal{L}_{\text{pos}}^{\text{GFL}} = -\frac{1}{N} \sum_l^{\{f,c\}} \sum_i^N \mathbb{1}\left[\tilde{\mathbf{S}}^l(i, c_i^l) > \tau^g\right] \tilde{\mathbf{S}}^l(i, c_i^l),$$

N may be the number of the Gaussian feature. $\mathcal{L}_{\text{pos}}^{\text{GFL}}$ may represent a positive loss function for Global Feature-guided learning (GFL). $\tau^g$ may be a threshold value to determine whether a particular Gaussian feature belongs to that global cluster or not, and may be set to 0.9.

If a closeness between the Gaussian feature and the nearest global cluster is greater than $\tau^g$, the Gaussian feature may be learned to bring the closest global cluster closer together.

Conversely, a negative loss function that encourages the Gaussian feature to move away from other global cluster may be defined as follows: [Mathematical Equation 12].

[Mathematical formula 12]

$$\mathcal{L}_{\text{neg}}^{\text{GFL}} = \frac{1}{N} \sum_l^{\{f,c\}} \sum_i^N \frac{1}{C^l} \sum_{c \neq c_i^l}^{C^l} \mathbb{1}\left[\tilde{\mathbf{S}}^l(i, c) > \tau^l\right] \tilde{\mathbf{S}}^l(i, c)$$

$\mathcal{L}_{\text{neg}}^{\text{GFL}}$ may represent a negative loss function for Global Feature-guided learning (GFL).

The gaussian feature may be trained to become distant up to a threshold similarity $\tau^l$ from the global clusters other than the nearest global cluster.

The total loss of the contrastive learning may be defined as follows [Mathematical Formula 13].

[Mathematical formula 13]

$$\mathcal{L}_{\mathrm{GFL}} = \mathcal{L}_{\mathrm{pos}}^{\mathrm{GFL}} + \mathcal{L}_{\mathrm{neg}}^{\mathrm{GFL}}$$

In this way, the Global Feature-guided learning method may be a learning method that maintains viewpoint consistency by using global feature candidates obtained from all viewpoints of the scene. In short, the Global Feature-guided learning method may be a learning method that induces the features of each 3D Gaussian to belong to a specific global cluster, while at the same time moving away from other global clusters.

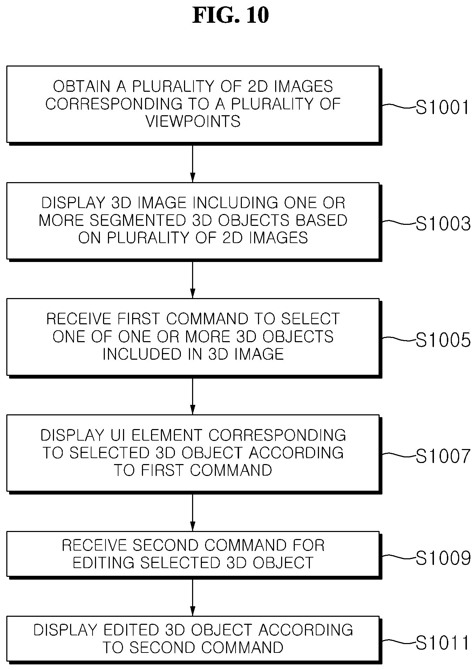

FIG. 10 is a flowchart illustrating a method of operating a device according to another embodiment of the present disclosure.

Referring to FIG. 10, the processor 180 of the device 100 may obtain a plurality of 2D images corresponding to a plurality of viewpoints (S1001).

In one embodiment, the plurality of 2D images may be images captured from a plurality of camera angles. A viewpoint may be referred to as a camera angle, a view angle, or a view.

In one embodiment, the processor 180 may acquire the plurality of 2D images captured through the camera 121.

In another embodiment, the processor 180 may receive the plurality of 2D images from an external device via the communication interface 110.

The processor 180 may obtain a 3D image including one or more segmented 3D objects based on the obtained plurality of 2D images and display the obtained 3D image on the display 151 (S1003).

The processor 180 may obtain a 3D image including one or more 3D objects segmented from the plurality of 2D images through a 3D segment model.

The 3D segment model may be a model learned according to the embodiment of FIG. 3.

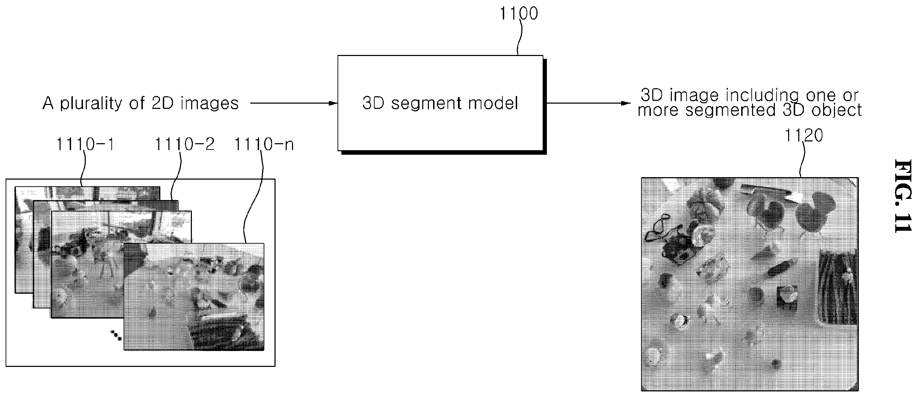

FIG. 11 is a drawing for explaining a 3D segment model according to one embodiment of the present disclosure.

In one embodiment, the 3D segment model 1100 may be an artificial neural network-based model learned by the learning processor 130 or processor 180 of the device 100.

In another embodiment, the 3D segment model 1100 may be a model learned by the server 200, and the processor 180 may receive the 3D segment model 1100 from the server 200 through the communication interface 110 and store the 3D segment model 1100 in the memory 170.

The 3D segment model 1100 may be a model that outputs a 3D image 1120 including one or more objects segmented from a plurality of 2D images 1100-1 to 1100-n corresponding to a plurality of viewpoints.

The 3D segment model 1100 may be a model learned according to the embodiment of FIG. 3.

The 3D segment model 1100 may be a model that segments an object by extracting global feature candidates representing each segment based on the plurality of 2D images corresponding to the plurality of viewpoints, and grouping segments corresponding to the same object by clustering the extracted global feature candidates.

One or more 3D objects included in the 3D image 1120 may be selectable (or clickable).

Again, let's explain FIG. 10.

Meanwhile, the processor 180 may display the obtained 3D image in a first area and one or more objects segmented within the 3D image in a second area. The first area and the second area may not overlap.

The processor 180 may receive a first command to select one of one or more 3D objects included in a 3D image (S1005).

In one embodiment, the processor 180 may receive the first command to select a 3D object via a pointer corresponding to a movement of a mouse connected via the user input interface 123.

In another embodiment, the processor 180 may receive a touch command for selecting the 3D object as the first command when the display 151 is implemented as a touch screen.

The processor 180 may display a UI element corresponding to the selected 3D object on the display 151 according to the received first command (S1007).

The UI element may be an element that indicates that the 3D object is selected.

In one embodiment, the UI element may be an element for identifying a selected 3D object.

For example, the processor 180 may highlight the selected 3D object according to the first command.

As another example, the processor 180 may display an indicator indicating that the 3D object has been selected in accordance with the first command at a location adjacent to the selected 3D object. The indicator may be an arrow, an animation, or a pointer, but this is only an example.

In another embodiment, the UI element may include detail objects that configures the selected 3D object. The detail objects may be segmented partial objects at the fine level.

The processor 180 may receive a second command for editing the selected 3D object (S1009).

In one embodiment, the second command may be a command for changing an attribute of the 3D object. For example, the second command may be a command for editing one or more of a name of the 3D object, a color of the 3D object, a size of the 3D object, or a position of the 3D object.

The processor 180 may display the edited 3D object on the display 151 according to the received second command (S1011).

Below, an embodiment of FIG. 10 is described in detail.

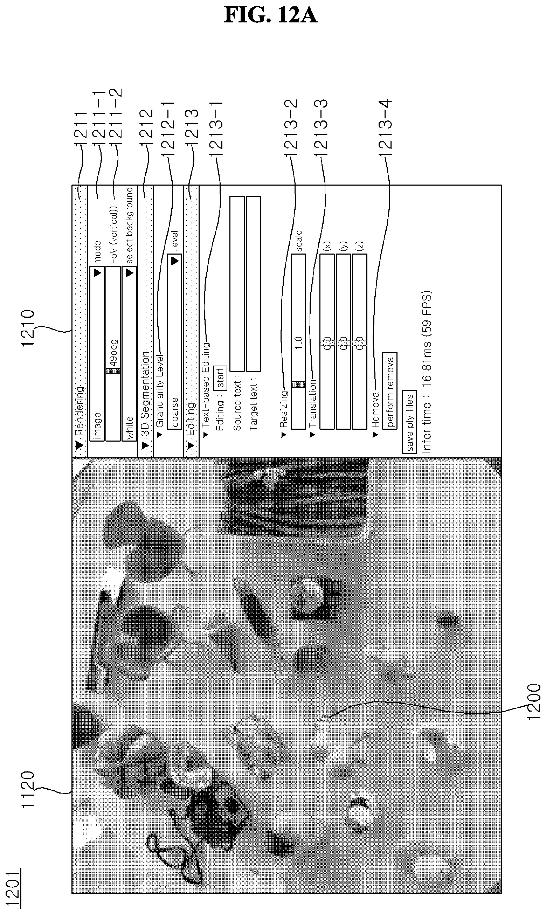

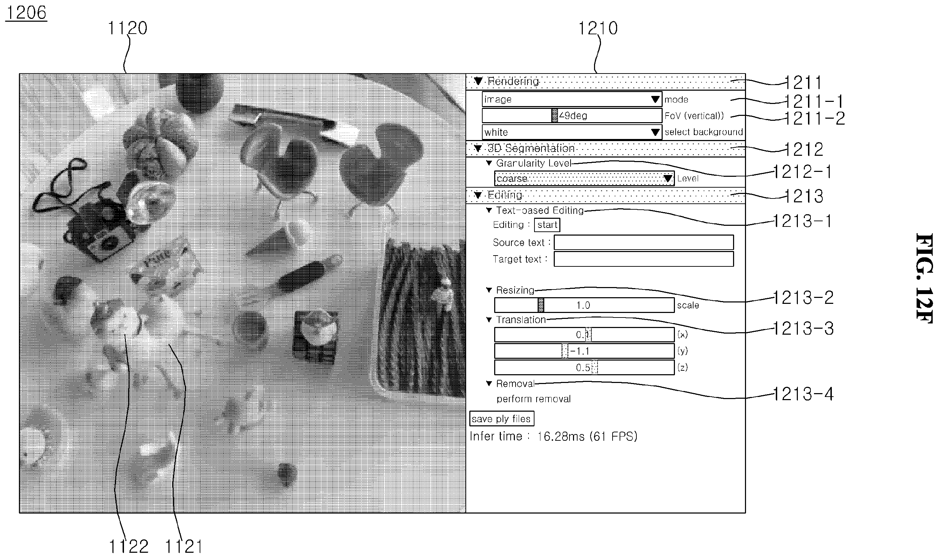

FIGS. 12A to 12I are drawings for explaining a process of editing a selected 3D object on a 3D image including a plurality of 3D objects according to an embodiment of the present disclosure.

The processor 180 may obtain the 3D image 1120 from the plurality of 2D images 1100-1 to 1100-n corresponding to the plurality of viewpoints through the 3D segment model 1100 as illustrated in FIG. 11.

Referring to FIGS. 12A to 12I, execution screens of a segment application for editing a 3D image obtained through the 3D segment model 1100 are illustrated.

Referring to FIG. 12A, the processor 180 of the device 100 may display a first screen 1201 on the display 151 according to the execution of the segment application.

The first screen 1201 may include the 3D image 1120 obtained from the plurality of 2D images 1100-1 to 1100-n corresponding to a plurality of viewpoints and an editing menu 1210.

The edit menu 1210 may include a rendering menu 1211, a 3D segmentation menu 1212, and a 3D object editing menu 1213.

The rendering menu 1211 may be a menu for settings related to image rendering.

The rendering menu 1211 may include a mode item 1211-1 for setting the image display mode and a FOV item 1211-2 for setting the FOV (Field Of View).

The image mode item 1211-1 may be set to either an image mode for displaying a 3D image or a segment mode for displaying a segment image. In FIG. 12A, the mode item 1211-1 may be set to an image mode.

The rendering menu 1211 may further include items for setting a background color of the area in which the image is displayed.

The 3D segmentation menu 1212 may be a menu for setting a segmentation level of a mask image. The 3D segmentation menu 1212 may include a granularity level item 1212-1 for setting the segmentation level. The granularity level item 1212-1 may be set to either the coarse level or the fine level. It is assumed that the 3D image 1120 is an image set to the coarse level. The 3D image 1120 may be referred to as a coarse level 3D image.

The 3D object editing menu 1213 may be a menu for editing the attributes of a 3D object selected in a 3D image 1120.

The 3D object editing menu 1213 may include a text-based editing item 1213-1, a size item 1213-2, a transformation item 1213-3, and a remove item 1213-4.

A text-based editing item 1213-1 may be an item for editing attributes of the 3D object using text input.

The size item 1213-2 may be an item for editing the size of the 3D object.

The transformation item 1213-3 may be an item for transforming a direction of the 3D object or moving the 3D object. The transformation item 1213-3 may be an item for receiving an input for moving the 3D object in the x, y, and z-axis directions.

The removal item 1213-4 may be an item for removing the 3D object within the 3D image 1120.

The 3D image 1120 included in the first screen 1201 may include a plurality of 3D objects segmented by the 3D segment model 1100.

A pointer (1200, or cursor) may be displayed on the first screen 1201, and the processor 180 may receive input for manipulating the pointer 1200 to select (or click) and edit the 3D object.

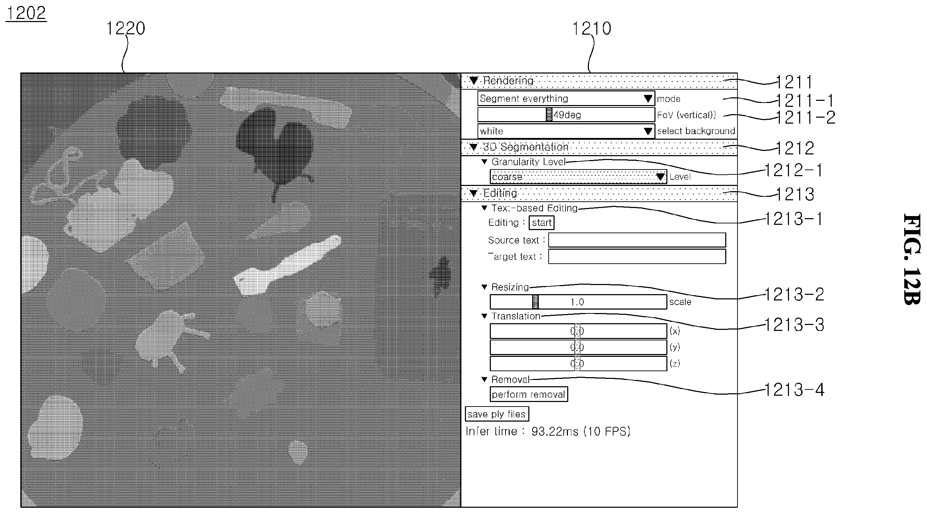

The processor 180 may display a second screen 1202 including a first segment image 1220 when the image display mode is set to segment mode through the mode item 1211-1 and the segmentation level is set to the coarse level through the granularity level item 1212, as illustrated in FIG. 12B.

The first segment image 1220 may be an image that identifies a selectable 3D object at the coarse level. The coarse level may be a level that segments an entire area into unit objects. The first segment image 1220 may be a mask image. For example, the first segment image 1220 may correspond to the first mask image 550 of FIG. 5B.

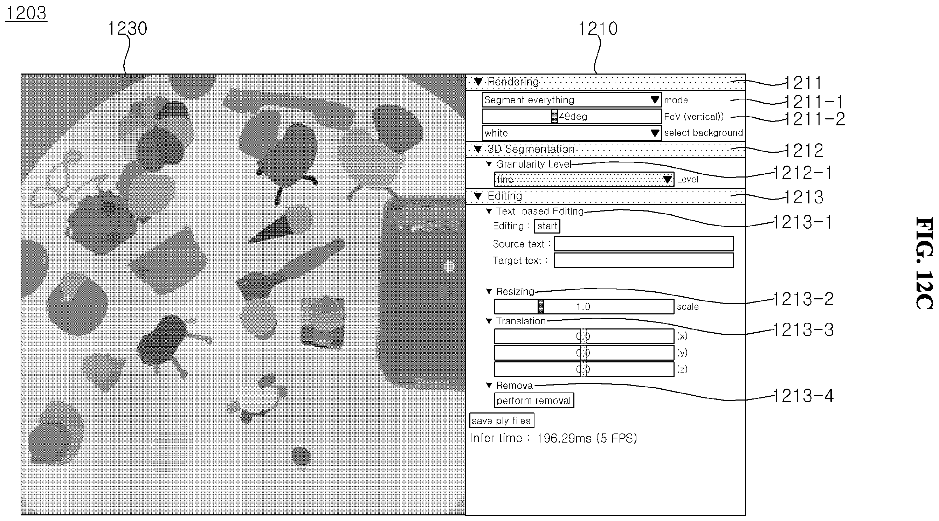

The processor 180 may display a third screen 1203 including a second segment image 1230 when the image display mode is set to segment mode through the mode item 1211-1 and the segmentation level is set to the fine level through the granularity level item 1212, as shown in FIG. 12C.

The second segment image 1230 may be an image that identifies a selectable 3D object at a fine level. The fine level may be a level that segments each of a plurality of unit objects into detailed objects. The second segment image 1230 may be a mask image. For example, the second segment image 1230 may correspond to the second mask image 560 of FIG. 5B.

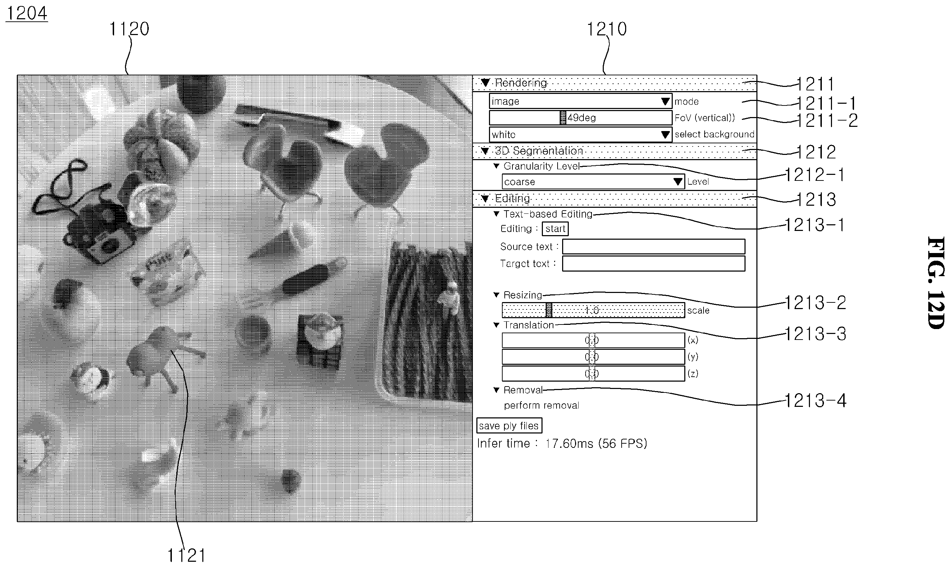

Referring to FIG. 12D, when the processor 180 receives a command to select a first 3D object 1121 within the 3D image 1120, the processor 180 may display a fourth screen 1204 identifying the first 3D object 1121 selected according to the received command on the display 151.

The processor 180 may highlight the selected first 3D object 1121 or identify the first 3D object 1121. The processor 180 may further display an indicator (not shown) indicating that the first 3D object 1121 has been selected.

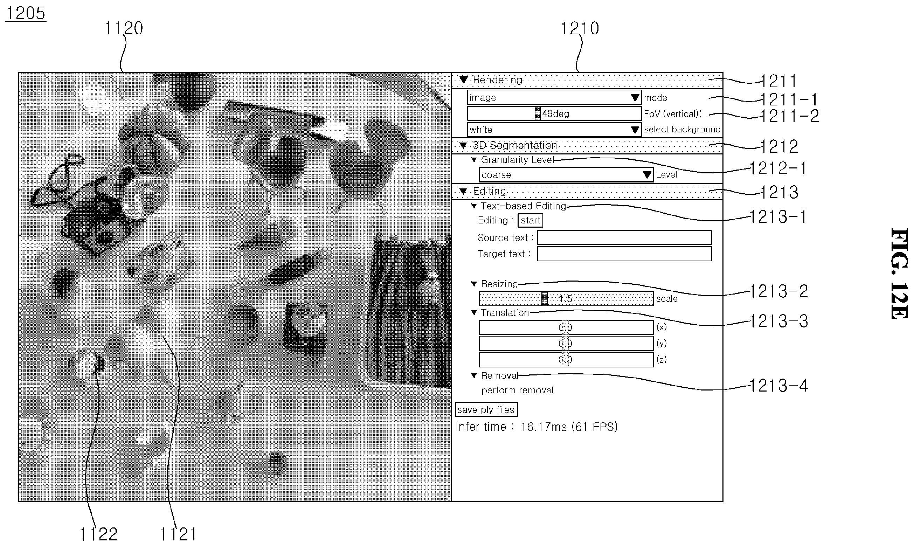

When the processor 180 receives a command to adjust the size of the first 3D object 1121 selected through the size item 1213-2, as illustrated in FIG. 12E, the processor 180 may display a second screen 1205 including the first 3D object 1121 whose size has been adjusted, on the display 151. The command to adjust the size of the first 3D object 1121 may be a command to input a scale value.

Meanwhile, a second 3D object 1122 may be placed adjacent to the first 3D object 1121.

The processor 180 may move the second 3D object 1122 from a first point to a second point according to a transformation command that inputs an x-axis value, a y-axis value, and a z-axis value through the transformation item 1213-3 after the second 3D object 1122 is selected. The processor 180 may display a sixth screen 1206 showing a state in which the second 3D object is moved according to the transformation command of the second 3D object 1122, on the display 151.

The processor 180 may reflect the edited 3D object in real time on the 3D image 1120 according to a command to edit the value of any one of the granularity level item 1212-1, the size item 1213-2, or the transformation item 1213-3 for setting the position of the selected 3D object.

In this way, according to the embodiment of the present disclosure, since editing is possible in segmented object unit on a 3D image, attributes of each object may be individually adjusted, thereby providing precise customization and an intuitive interface without affecting the entire scene.

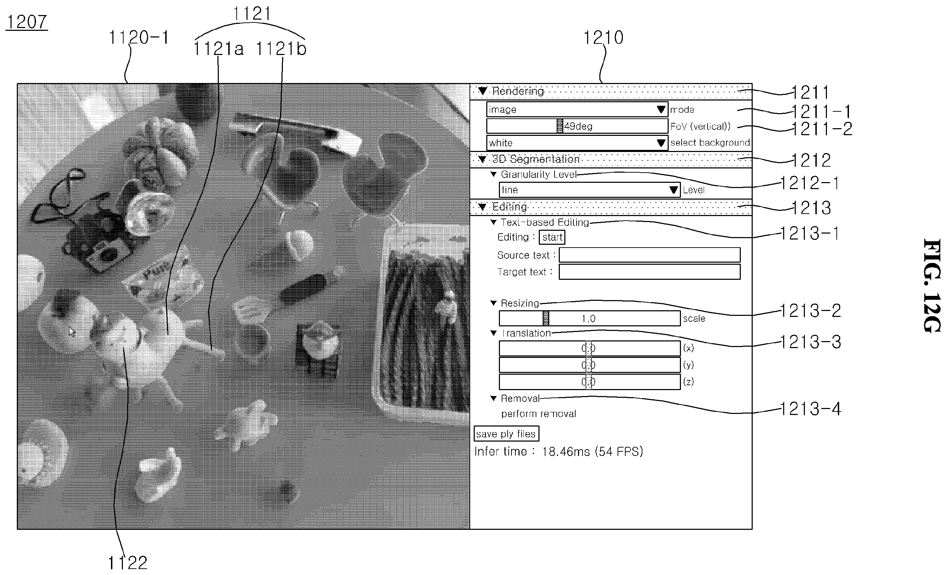

When the granularity level item 1212-1 is set to the fine level while the sixth screen 1206 is displayed, the processor 180 may display the seventh screen 1207 including a fine level 3D image 1120-1 on the display 151, as in FIG. 12G.

The fine level 3D image 1120-1 may be an image in which each of a plurality of 3D objects is subdivided into detailed objects.

The detailed objects that make up a 3D object in the fine level 3D image 1120-1 may be edited through the edit menu 1210.

A first 3D object 1121 may be segmented into a first detailed object 1121a and a second detailed object 1121b. Each of the first detailed object 1121a and the second detailed object 1121b may be selectable or clickable.

If the first 3D object 1121 is an animal figure, the first detailed object 1121a may represent a body of the animal figure, and the second detailed object 1121b may represent the a leg of the animal figure.

The processor 180 may edit the size and position of a selected detailed object according to an editing command of the first detailed object 1121a or the second detailed object 1121b.

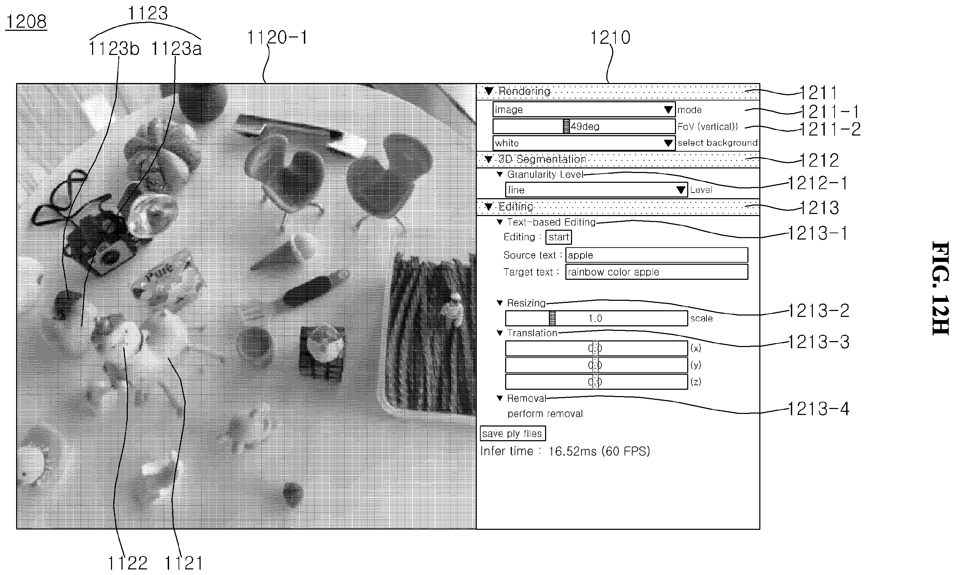

The processor 180 may display an eighth screen 1208 in which a source text of apple indicating a source and a target text of rainbow color apple indicating a target are entered on a text-based editing item 1213-1, as illustrated in FIG. 12H. The source text may be a text for selecting a first detailed object 1123a, and the target text may be a text for editing an attribute of the selected first detailed object 1123a.

A third 3D object 1123 representing a fruit may be segmented into the first detailed object 1123a representing an apple and the second detailed object 1123b representing a leaf.

The processor 180 may select the first detailed object 1123a of the third 3D object 1123 corresponding to apple according to the input of the source text. The processor 180 may edit the first detailed object 1123a of the third 3D object 1123 selected according to the input of the target text to have a rainbow color.

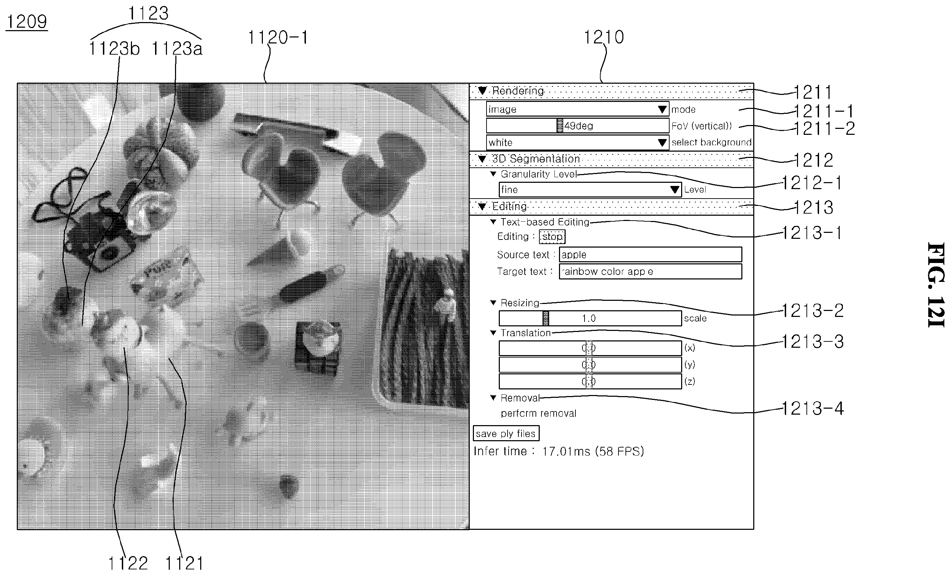

The processor 180 may switch the eighth screen 1208 including the first detailed object 1123a having a green color to a ninth screen 1209 including the first detailed object 1123a having a rainbow color according to the input of the source text and the target text (see FIG. 12I).

In this way, according to an embodiment of the present disclosure, by segmenting detailed objects constituting a unit object on a 3D image, the attributes of each detailed object may be individually adjusted, and the user may perform precise customization at the detailed element level of the object.

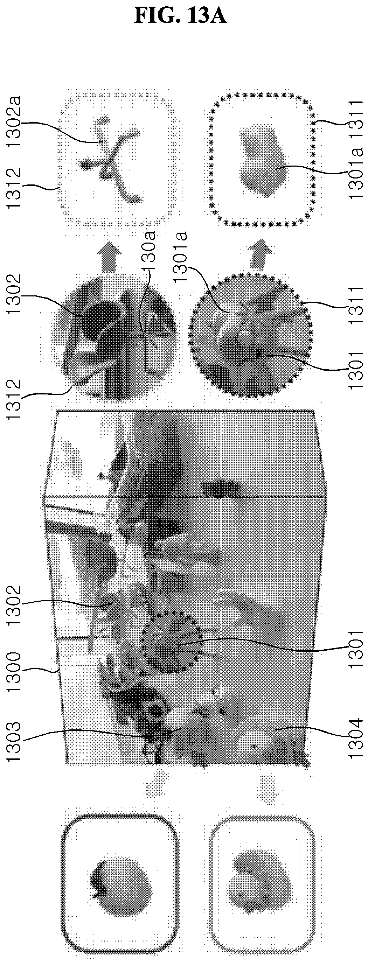

FIGS. 13A to 13D are drawings for explaining a method for providing information on segmented 3D objects in a 3D image according to an embodiment of the present disclosure.

Referring to FIG. 13A, the processor 180 may display a 3D image 1300 including a plurality of 3D objects 1301, 1302, 1303, 1304 on the display 151. The processor 180 may further display the edit menu 1210 on one side of the 3D image 1300. The display of the edit menu 1210 is omitted.

The processor 180 may display a selected 3D object among a plurality of 3D objects 1301, 1302, 1303, 1304 on an area other than an area where a 3D image 1300 is displayed.

For example, when a first 3D object 1301 is selected, the processor 180 may display the selected first 3D object 1301 on a first region 1311 that is a separate region from the region where the 3D image 1300 is displayed. The processor 180 may display the detailed object 1301a on the first region 1311 according to a command for selecting the detailed object 1301a of the first 3D object 1301 on the first region 1311.

When a second 3D object 1302 is selected, the processor 180 may display the selected second 3D object 1302 on a second area 1312 that is a separate area from the area where the 3D image 1300 is displayed. The processor 180 may display the detailed object 1302a on the second area 1312 according to a command for selecting a detailed object 1302a of the second 3D object 1302 on the second area 1312.

In another embodiment, the processor 180 may determine that the first 3D object 1301 is selected when the detailed object 1301a is selected once (or clicked), and may determine that the detailed object 1301a is selected when the detailed object 1301a is selected twice in a row (or double-clicked).

In this way, according to an embodiment of the present disclosure, since segmented 3D objects and detailed objects of 3D objects on a 3D image are displayed on separate areas, the cognitive burden of manipulating a specific object in the entire scene may be reduced, and the accuracy of user input may be increased.

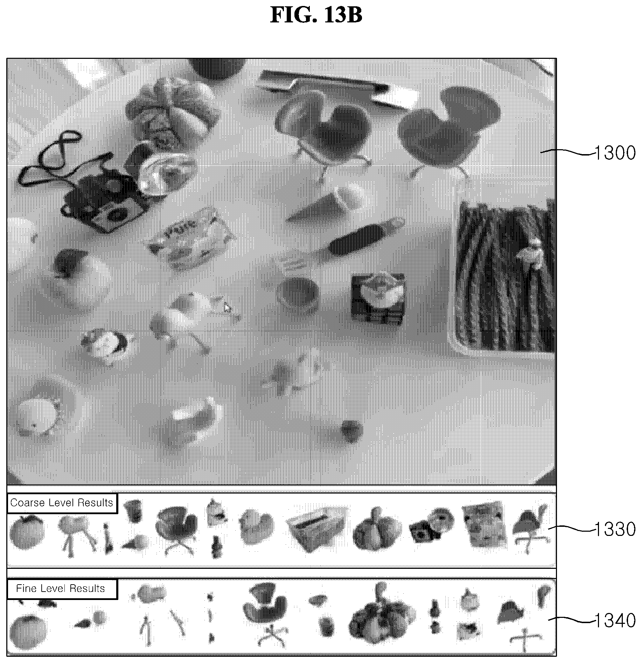

Referring to FIG. 13B, the processor 180 may display the 3D image 1300, a coarse level result window 1330, and a fine level result window 1340 on the display 151.

When the 3D image 1300 is acquired from the plurality of 2D images corresponding to the plurality of viewpoints, the processor 180 may display the 3D image 1300, the coarse level result window 1330, and the fine level result window 1340 on the display 151.

The coarse level result window 1330 may include a plurality of unit objects segmented from the 3D image 1300. Each of the plurality of segmented unit objects may be selectable and editable.

The fine level result window 1340 may include detailed objects that subdivide each of the multiple unit objects included in the coarse level result window 1330. Each of the subdivided detailed objects may be selectable and editable.

In this way, according to the embodiment of the present disclosure, by separately displaying coarse and fine level results and enabling selection and attribute editing for each segment, a user may perform intuitive and precise editing work based on a hierarchical structure even within a complex 3D scene.

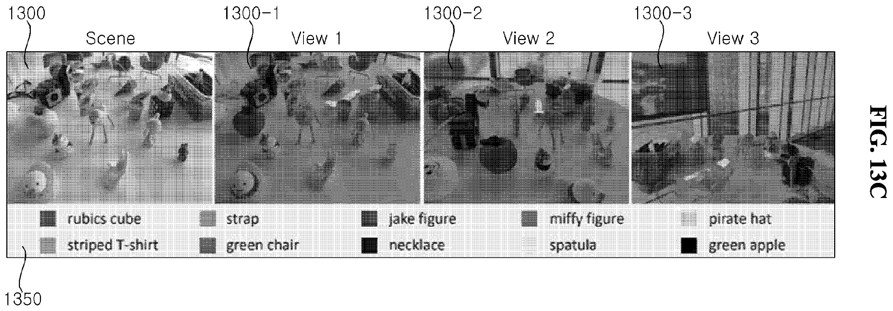

Referring to FIG. 13C, the processor 180 may display a 3D image 1300 and tag information 1350 on the display 151. The tag information 1350 may be information for identifying 3D objects that may be selected and edited. The tag information 1350 may include one or more of a color of the 3D object and a name of the 3D object.

The processor 180 may further display a plurality of 3D view images 1300-1, 1300-2, 1300-3. Each of the plurality of 3D view images 1300-1, 1300-2, 1300-3 may be an image corresponding to a different view point.

In this way, according to an embodiment of the present disclosure, tag information for an editable 3D object is provided, so that a user may easily and clearly recognize the editable object.

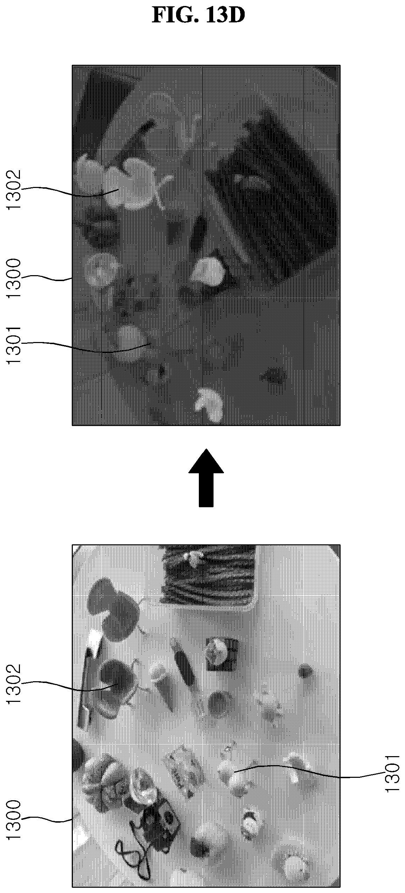

Referring to FIG. 13D, the processor 180 may identify a plurality of editable 3D objects within the 3D image 1300. For example, the processor 180 may identify a plurality of editable 3D objects within the 3D image 1300 with different colors. Specifically, the color of the first 3D object 1301 may be expressed as a first color, and the color of the second 3D object 1302 may be expressed as a second color.

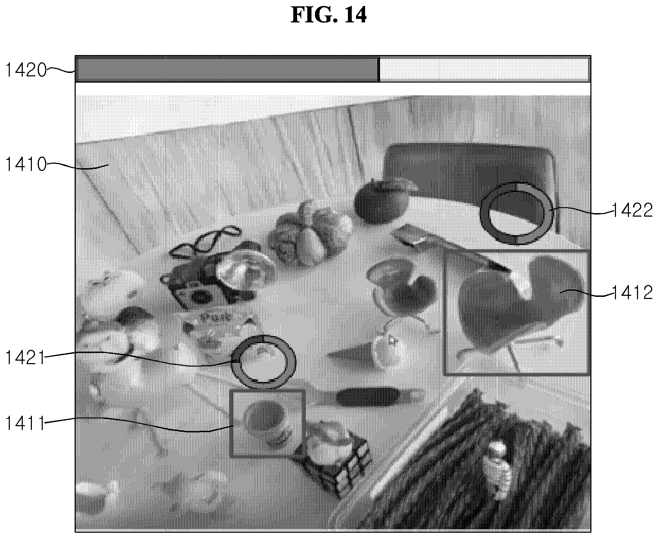

FIG. 14 is a drawing explaining a method for guiding shooting when shooting a 2D image to generate a 3D image according to one embodiment of the present disclosure.

Referring to FIG. 14, the processor 180 may display a 2D image 1410 corresponding to a specific view point captured by the camera 121 on the display 151.

The user may capture a scene multiple times with different viewpoints.

The processor 180 may display a guide on the display 151 indicating that additional shooting is required when additional 2D images are required to generate a 3D image. The guide may be expressed in the form of a text or a progress bar.

The processor 180 may further display a first progress bar 1420 indicating the progress of the generation of the 3D image. The first progress bar 1420 may be a UI indicating that additional shooting for another viewpoint is required for outputting the 3D image through the 3D segment model 1100.

The processor 180 may display a second progress bar 1421 on one side of the first object 1411 indicating that additional shooting for a different viewpoint is required for a segment of the first object 1411. The second progress bar 1421 may indicate a degree of need for additional shooting for a scene including the first object 1411.

The processor 180 may display a third progress bar 1422 on one side of the second object 1412 indicating that additional shooting for the different viewpoint is needed for a segment of the second object 1412. The third progress bar 1422 may indicate the degree to which additional shooting is needed for a scene including the second object 1412.

Additionally, the processor 180 may distinguish and display objects that may be reconfigured into 3D objects and objects that cannot be reconfigured into the 3D objects among a plurality of objects included in the 2D image 1410.

According to an embodiment of the present disclosure, by visually distinguishing and displaying the progress of segment learning for each object on the 2D image 1410, the user may intuitively recognize which object requires additional shooting, and effectively respond to securing an optimal viewpoint for generating the 3D image.

In addition, by distinguishing between objects that may be reconstructed as 3D objects and those that cannot, the user may selectively collect data that is valid for 3D modeling, thereby improving the efficiency and accuracy of the entire shooting and learning process.

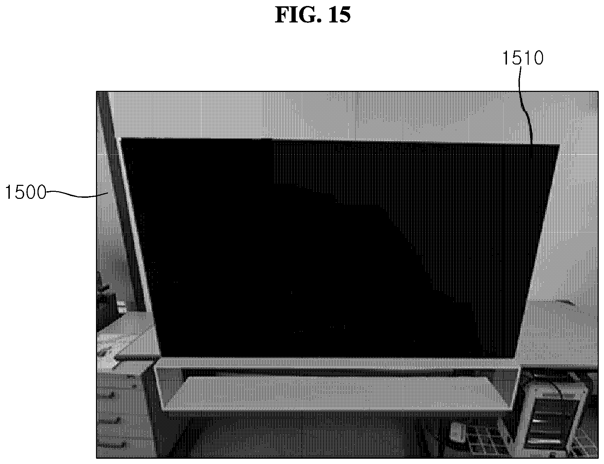

FIG. 15 is a drawing illustrating an example of performing furniture arrangement in a home based on a 3D image obtained through a 3D segment model according to one embodiment of the present disclosure.

Referring to FIG. 15, the processor 180 may obtain a 3D image 1500 from a plurality of 2D images corresponding to a plurality of viewpoints through the 3D segment model 1100. The 3D image 1500 may include a segmented TV object 1510 corresponding to a TV.

The processor 180 may further display the editing menu 1210 on one side of the 3D image 1500. The processor 180 may change at least one of the size or position of the TV object 1510 according to a first command for selecting the TV object 1510 and a second command for editing the selected TV object 1510.

By editing the size and placement of the TV object 1510, the user may adjust a visual configuration or a placement environment occupied by the TV object 1510 within the 3D space according to the user's intention. In addition, a realism and an usability may be increased in virtual interior design and space simulation.

Meanwhile, the processor 180 may provide a link for purchasing a similar product when editing the size, color, or texture of the TV object 1510. For example, when enlarging the size of the TV object 1510, the processor 180 may display an address of a website that sells a TV corresponding to the enlarged size.

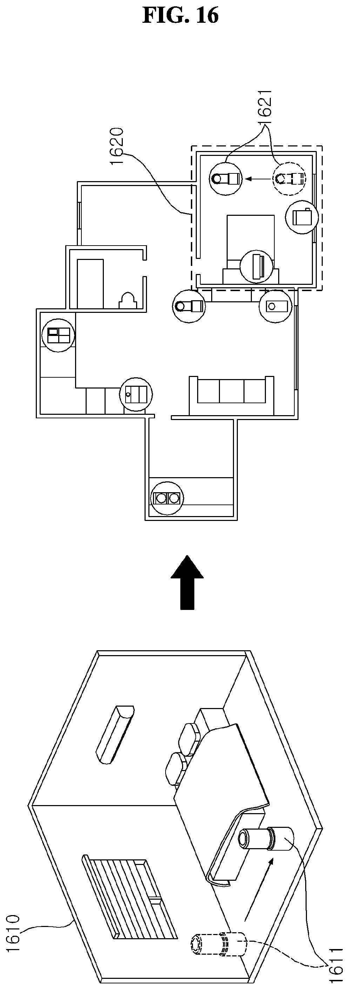

FIG. 16 may be a drawing illustrating a scenario for generating a top view image based on a 3D image and linking the 3D image and the top view image according to one embodiment of the present disclosure.

Referring to FIG. 16, the processor 180 may generate a 3D image 1610 representing the interior of a room from a plurality of 2D images corresponding to a plurality of viewpoints. The 3D image 1610 may include a segmented first 3D object 1611 representing an air purifier.

The processor 180 may generate a top view image 1620 corresponding to a top view point based on the 3D image 1610. The top view image 1620 may include a second 3D object 1621 in a top view form corresponding to the first 3D object 1611. The first 3D object 1611 and the second 3D object 1621 may represent the same object, that is, an air purifier.

The processor 180 may equally reflect the edited result according to the editing command for the first 3D object 1611 of the 3D image 1610 to the second 3D object 1621 of the top view image 1620.

For example, when the processor 180 receives an editing command to move the first 3D object 1611 of the 3D image 1610 from a first location to a second location, the processor 180 may move the first 3D object 1611 from the first location to the second location. At the same time, the processor 180 may move the second 3D object 1621 from the first location to the second location on the top view image 1620.

The processor 180 may equally reflect an edited result according to the editing command for the second 3D object 1621 of the top view image 1620 to the first 3D object 1611 of the 3D image 1610.

In this way, according to the embodiment of the present disclosure, the editing result on the 3D image is automatically reflected on the top view image, and vice versa, so that the user may perform intuitive and consistent editing work at various viewpoints, and accordingly, the precision of object arrangement in 3D space and editing efficiency may be greatly improved.

A device 100 according to one embodiment of the present disclosure may comprise a display 151; and at least one processor 180 configured to: obtain a plurality of two-dimensional (2-Dimensional) images corresponding to a plurality of viewpoints, obtain a 3D image including one or more segmented 3D objects based on the obtained plurality of 2D images, display a UI (User Interface) element indicating that a segmented 3D object is selected on the display in response to a first command to select one of the one or more segmented 3D objects representing a unit object or a detailed object constituting the unit object, and display an edited 3D object on the display in response to a second command to edit the selected 3D object.

The second command may be a command for editing an attribute of the selected 3D object, and the attribute of the 3D object may include at least one of a color, a size or a position of the 3D object.

The at least one processor 180 may further obtain a text input as the second command, edit the attribute of the 3D object according to the text input, and display the edited 3D object on the display.

The position of the 3D object may represent a transformation along at least one of the x-axis, y-axis, or z-axis directions.

The at least one processor 180 may further identify the one or more segmented 3D objects that are editable on the 3D image.

The at least one processor 180 may identify the one or more segmented 3D objects with different colors.

The at least one processor 180 may further display the selected 3D object in a separate area from an area where the 3D image is displayed, and the 3D object displayed on the separate area can be selectable as a single unit object, or any one of the detailed objects constituting the selected 3D object can be selectable.

The at least one processor 180 may further select the unit object in response to the first command if a segmentation level is set to a first level that segments the unit object included in the 3D image, and select the detailed object in response to the first command if the segmentation level is set to a second level that segments detailed objects constituting each unit object included in the 3D image.

The at least one processor 180 may further select the unit object if the 3D object is selected once, and select the detailed object if the 3D object is selected in a row.

The at least one processor 180 may further display tag information including one or more tags identifying the one or more segmented 3D objects that can be editable on the 3D image on an area other than an area where the 3D image is displayed.

The tag may comprise at least one of a color or a name for identifying the 3D object.

The UI element may comprise an indicator indicating that the 3D object is selected.

The at least one processor 180 may further display an editing menu on the display for editing the one or more of the segmented 3D objects, and receive the second command through the edit menu.

The edit menu may comprise a granularity level item for setting a granularity level, a size item for setting a size of the selected 3D object, and a transformation item for setting a position of the selected 3D object.

The at least one processor 180 may further reflect the edited 3D object in real time on the 3D image according to the second command for editing the value of any one of the items of the granularity level item, the size item or the transformation item for setting the position of the selected 3D object.

The at least one processor 180 may further obtain the plurality of 2D images through a camera 121, and display a guide indicating that additional shooting is required to generate the 3D image on the display.

The at least one processor 180 may further generate a top view image based on the 3D image, when the second command for editing the attribute of a first 3D object included in the 3D image is received, change the attribute of a second 3D object corresponding to the first 3D object included in the top view image in the same manner while changing the attribute of the first 3D object according to the received second command.

The at least one processor 180 may further obtain the 3D image including the one or more segmented 3D objects based on the plurality of 2D images through a 3D segment model 1100, wherein the 3D segment model may a model that segments an object by extracting global feature candidates representing each segment based on the plurality of 2D images, clustering the extracted global feature candidates, and grouping segments corresponding to the same object.

The functions of the elements disclosed in the present invention may be implemented using circuits or processing circuits including general purpose processors, special purpose processors, integrated circuits, ASICs (application specific integrated circuits), conventional circuits and/or combinations thereof. A processor may be defined as a processing circuit or circuits including transistors and other circuits.

In the present invention, a circuit, a unit or a mean may be hardware designed or programmed to perform the specified function. The hardware may be the hardware disclosed in the present invention or other known hardware programmed or configured to perform the specified function. If the hardware is a processor which may be considered as a type of circuit, the circuits, means or units may be a combination of hardware and software, and the software may constitute hardware and/or a processor.

The above-described present disclosure may be implemented as a computer-readable code on a medium in which a program is recorded. The computer-readable medium includes all kinds of recording devices in which data that may be read by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device, and the like. In addition, the computer may include the processor 180 of an artificial intelligence device.

**Claims**

1. A device (100), comprising:

   a display (151); and
   at least one processor (180) configured to:

      obtain a plurality of two-dimensional (2-Dimensional) images corresponding to a plurality of viewpoints,
      obtain a 3D image including one or more segmented 3D objects based on the obtained plurality of 2D images,
      display a UI (User Interface) element indicating that a segmented 3D object is selected on the display in response to a first command to select one of the one or more segmented 3D objects representing a unit object or a detailed object constituting the unit object, and
      display an edited 3D object on the display in response to a second command to edit the selected 3D object.

2. The device (100) of claim 1, wherein the second command is a command for editing an attribute of the selected 3D object, and the attribute of the 3D object include at least one of a color, a size or a position of the 3D object.

3. The device (100) of claim 2, wherein the at least one processor is further configured to:

   obtain a text input as the second command,

edit the attribute of the 3D object according to the text input, and
display the edited 3D object on the display.

4. The device (100) of claim 2, wherein the position of the 3D object represents a transformation along at least one of the x-axis, y-axis, or z-axis directions.

5. The device (100) of claim 1, wherein the at least one processor is further configured to:
identify the one or more segmented 3D objects that are editable on the 3D image.

6. The device (100) of claim 1, wherein the at least one processor is further configured to:

display the selected 3D object in a separate area from an area where the 3D image is displayed, and
wherein the 3D object displayed on the separate area can be selectable as a single unit object, or any one of the detailed objects constituting the selected 3D object can be selectable.

7. The device (100) of claim 1, wherein the at least one processor is further configured to:

select the unit object in response to the first command if a segmentation level is set to a first level that segments the unit object included in the 3D image, and
select the detailed object in response to the first command if the segmentation level is set to a second level that segments detailed objects constituting each unit object included in the 3D image.

8. The device (100) of claim 1, wherein the at least one processor is further configured to:

select the unit object if the 3D object is selected once, and
select the detailed object if the 3D object is selected in a row.

9. The device of claim 1, wherein the at least one processor is further configured to:

display tag information including one or more tags identifying the one or more segmented 3D objects that can be editable on the 3D image on an area other than an area where the 3D image is displayed,
wherein the tag comprises at least one of a color or a name for identifying the 3D object.

10. The device of claim 1, wherein the UI element comprises an indicator indicating that the 3D object is selected.

11. The device of claim 1, wherein the at least one processor is further configured to:

display an editing menu on the display for editing the one or more of the segmented 3D objects, and
receive the second command through the edit menu.

12. The device of claim 11, wherein the edit menu comprises a granularity level item for setting a granularity level, a size item for setting a size of the selected 3D object, and a transformation item for setting a position of the selected 3D object.

13. The device of claim 12, wherein the at least one processor is further configured to:
reflect the edited 3D object in real time on the 3D image according to the second command for editing the value of any one of the items of the granularity level item, the size item or the transformation item for setting the position of the selected 3D object.

14. The device of claim 1, wherein the at least one processor is further configured to:

obtain the 3D image including the one or more segmented 3D objects based on the plurality of 2D images through a 3D segment model,
wherein the 3D segment model is a model that segments an object by extracting global feature candidates representing each segment based on the plurality of 2D images, clustering the extracted global feature candidates, and grouping segments corresponding to the same object.

15. A method of operating the device, comprising:

obtaining a plurality of two-dimensional (2-Dimensional) images corresponding to a plurality of viewpoints,
obtaining a 3D image including one or more segmented 3D objects based on the obtained plurality of 2D images,
displaying a UI (User Interface) element indicating that a segmented 3D object is selected in response to a first command to select one of the one or more segmented 3D objects representing a unit object or a detailed object constituting the unit object; and
displaying an edited 3D object in response to a second command to edit the selected 3D object.

# FIG. 1

100

180

| 110 — COMMUNICATION INTERFACE |
| 120 — INPUT INTERFACE |
| 121 — CAMERA |
| 122 — MICROPHONE |
| 123 — USER INPUT INTERFACE |
| 130 — LEARNING PROCESSOR |

PROCESSOR

| MEMORY — 170 |
| OUTPUT INTERFACE — 150 |
| DISPLAY — 151 |
| AUDIO OUTPUT INTERFACE — 152 |
| HAPTIC DEVICE — 153 |
| OPTICAL OUTPUT INTERFACE — 154 |
| SENSOR — 140 |

FIG. 2

# FIG. 3

GENERATE FIRST MASK IMAGE OF FIRST LEVEL AND SECOND MASK IMAGE OF SECOND LEVEL BASED ON A PLURALITY OF 2D IMAGES —S301

GENERATE FIRST FEATURE FIELD OF FIRST LEVEL AND SECOND FEATURE FIELD OF SECOND LEVEL BASED ON THE PLURALITY OF 2D IMAGES —S303

PERFORM CONTRASTIVE LEARNING ON FIRST MASK IMAGE AND FIRST FEATURE FIELD, AND PERFORM CONTRASTIVE LEARNING ON SECOND MASK IMAGE AND SECOND FEATURE FIELD —S305

OBTAIN AVERAGE FEATURE SET INCLUDING A PLURALITY OF AVERAGE FEATURE VECTORS CORRESPONDING TO EACH OF A PLURALITY OF VIEWS —S307

CLUSTER AVERAGE FEATURE SET TO OBTAIN A PLURALITY OF GLOBAL CLUSTERS —S309

PERFORM CONTRASTIVE LEARNING BETWEEN EACH GLOBAL FEATURE CANDIDATE AND FEATURE VECTOR REPRESENTING EACH OF EXTRACTED PLURALITY OF GLOBAL CLUSTERS —S311

FIG. 4

EP 4 675 557 A1

**FIG.5A**

Training image

500

SAM (each image independently)

511 Segment 1
512 Segment 2
513 Segment 3

501

520

501

Coarse-level mask

521

501    531    530

Fine-level mask

# FIG. 5B

EP 4 675 557 A1

**FIG. 6A**

Fine feature $f_i^f = f_i^c \oplus \tilde{f}_i^c$

Coarse feature $f_i^c$

## Rasterizer Rendering

**FIG. 6B**

EP 4 675 557 A1

## FIG. 7A

$$M^I_{P1} = M^I_{P2}$$

29

## FIG. 7B

# FIG. 8

# FIG. 9A

Average pooling on each segment

View 1

900
901
910
911
921
920

## FIG. 9B

**FIG. 9C**

**FIG. 9D**

# FIG. 10

```
┌─────────────────────────────────────┐
│   OBTAIN A PLURALITY OF 2D IMAGES    │
│   CORRESPONDING TO A PLURALITY OF    │───S1001
│            VIEWPOINTS                │
└─────────────────────────────────────┘
                    │
                    ▼
┌─────────────────────────────────────┐
│  DISPLAY 3D IMAGE INCLUDING ONE OR   │
│  MORE SEGMENTED 3D OBJECTS BASED     │───S1003
│     ON PLURALITY OF 2D IMAGES        │
└─────────────────────────────────────┘
                    │
                    ▼
┌─────────────────────────────────────┐
│   RECEIVE FIRST COMMAND TO SELECT    │
│   ONE OF ONE OR MORE 3D OBJECTS      │───S1005
│        INCLUDED IN 3D IMAGE          │
└─────────────────────────────────────┘
                    │
                    ▼
┌─────────────────────────────────────┐
│  DISPLAY UI ELEMENT CORRESPONDING    │
│  TO SELECTED 3D OBJECT ACCORDING     │───S1007
│         TO FIRST COMMAND             │
└─────────────────────────────────────┘
                    │
                    ▼
┌─────────────────────────────────────┐
│    RECEIVE SECOND COMMAND FOR        │
│    EDITING SELECTED 3D OBJECT        │───S1009
└─────────────────────────────────────┘
                    │
                    ▼
┌─────────────────────────────────────┐
│  DISPLAY EDITED 3D OBJECT ACCORDING  │
│        TO SECOND COMMAND             │───S1011
└─────────────────────────────────────┘
```

# FIG. 11

A plurality of 2D images — 1110-1, 1110-2, 1110-n

1100 — 3D segment model

1120 — 3D image including one or more segmented 3D object

# FIG. 12A

FIG. 12B

# FIG. 12C

1203

1210

1230

1211
1211-1
1211-2
1212
1212-1
1213
1213-1
1213-2
1213-3
1213-4

▶ Rendering
Segment everything
▶ mode
FoV (vertical)) 49deg
white
▶ select background
▶ 3D Segmentation
▶ Granularity Level
fine ▶ Level
▶ Editing
▶ Text-based Editing
Editing : start
Source text :
Target text :
▶ Resizing
scale 1.0
▶ Translation
(x) 0.0
(y) 0.0
(z) 0.0
▶ Removal
perform removal
save ply files
Infer time : 196.29ms (5 FPS)

40

1204

1120

1210

▼ Rendering ——1211
image ▼ mode ——1211-1
49deg FoV (vertical)) ——1211-2
white ▼ select background

▼ 3D Segmentation ——1212
▼ Granularity Level ——1212-1
coarse ▼ Level

▼ Editing ——1213
▼ Text-based Editing ——1213-1
Editing : start
Source text :
Target text :

▼ Resizing ——1213-2
1.0 scale
▼ Translation ——1213-3
0.0 (x)
0.0 (y)
0.0 (z)
▼ Removal ——1213-4
perform removal
save ply files
Infer time : 17.60ms (56 FPS)

1121

FIG. 12D

1205

1120

1210

▼ Rendering — 1211

image ▼ mode — 1211-1
49deg FoV (vertical)) — 1211-2
white ▼ select background

▼ 3D Segmentation — 1212
▼ Granularity Level
coarse ▼ Level — 1212-1

▼ Editing — 1213
▼ Text-based Editing — 1213-1
Editing : start
Source text :
Target text :

▼ Resizing — 1213-2
1.5 scale
▼ Translation — 1213-3
0.0 (x)
0.0 (y)
0.0 (z)
▼ Removal — 1213-4
perform removal
save ply files
Infer time : 16.17ms (61 FPS)

1122 1121

FIG. 12E

# FIG. 12F

# FIG. 12G

1207

1210

▶ Rendering
image [mode ▶]
[49deg] [FoV (vertical))]
white [▶ select background]

▶ 3D Segmentation
▶ Granularity Level
fine [Level ▶]

▶ Editing
▶ Text-based Editing
Editing : [start]
Source text :
Target text :

▶ Resizing
[1.0] scale

▶ Translation
[0.0] (x)
[0.0] (y)
[0.0] (z)

▶ Removal
perform removal
[save ply files]
Infer time : 18.46ms (54 FPS)

1211
1211-1
1211-2
1212
1212-1
1213
1213-1
1213-2
1213-3
1213-4

1120-1
1121
1121a  1121b
1122

# FIG. 12H

1208

1210

1211
1211-1
1211-2
1212
1212-1
1213
1213-1
1213-2
1213-3
1213-4

▶ Rendering
image ▶ mode
49deg FoV (vertical))
white ▶ select background
▶ 3D Segmentation
▶ Granularity Level
line ▶ Level
▶ Editing
▶ Text-based Editing
Editing : start
Source text : apple
Target text : rainbow color apple
▶ Resizing
1.0 scale
▶ Translation
0.0 (x)
0.0 (y)
0.0 (z)
▶ Removal
perform removal
save ply files
Infer time : 16.52ms (60 FPS)

1120-1

1123
1123b 1123a

1122 1121

# FIG. 12I

1210

Rendering
▶ mode
image
49deg   FoV (vertical))
white   select background

3D Segmentation
▶ Granularity Level
fine   Level

Editing
▶ Text-based Editing
Editing : stop
Source text : apple
Target text : rainbow color app e

▶ Resizing
1.0   scale

▶ Translation
0.0 (x)
0.0 (y)
0.0 (z)

▶ Removal
perform removal
save ply files
Infer time : 17.01ms (58 FPS)

# FIG. 13A

# FIG. 13B

# FIG. 13C

# FIG. 13D

## FIG. 14

**FIG. 15**

# FIG. 16

Europäisches
Patentamt

European
Patent Office

Office européen
des brevets

## EUROPEAN SEARCH REPORT

**Application Number**

EP 25 18 7633

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/144623 A1 (GORI GIORGIO [US] ET AL) 2 May 2024 (2024-05-02) * the whole document * ----- | 1-15 | INV.<br>G06T7/11<br>G06F3/048<br>G06T19/20 |
| X | CN 112 085 840 A (TENCENT TECH SHENZHEN CO LTD) 15 December 2020 (2020-12-15) * abstract * * claims 1,2; figure 2 * ----- | 1,15 | |
| A | US 10 204 447 B2 (MICROSOFT TECHNOLOGY LICENSING LLC [US]) 12 February 2019 (2019-02-12) * the whole document * ----- | 1-15 | |

**TECHNICAL FIELDS SEARCHED (IPC)**

G06T
G06F

The present search report has been drawn up for all claims

| Place of search | Date of completion of the search | Examiner |
|---|---|---|
| Munich | 12 November 2025 | Frias Velazquez, A |

EPO FORM 1503 03.82 (P04C01)

## ANNEX TO THE EUROPEAN SEARCH REPORT
## ON EUROPEAN PATENT APPLICATION NO.

EP 25 18 7633

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2025

| Patent document cited in search report | Publication date | Patent family member(s) | Publication date |
|---|---|---|---|
| US 2024144623 A1 | 02-05-2024 | NONE | |
| CN 112085840 A | 15-12-2020 | NONE | |
| US 10204447 B2 | 12-02-2019 | US 2017132837 A1 | 11-05-2017 |
| | | WO 2017200968 A1 | 23-11-2017 |